# EUROPEAN PATENT APPLICATION

(11) **EP 4 661 503 A1**
(43) Date of publication of application: **10.12.2025**
(21) Application number: 23929294.9
(22) Date of filing: 30.03.2023
(51) Int. Cl.: H04W 40/36

(54) **COMMUNICATION METHOD AND DEVICE**

(71) Applicant: Huawei Technologies Co., Ltd., Shenzhen, Guangdong 518129 (CN)
(72) Inventor: XI, Yan, Shenzhen, Guangdong 518129 (CN); YAN, Xueqiang, Shenzhen, Guangdong 518129 (CN); ZHAO, Mingyu, Shenzhen, Guangdong 518129 (CN); WANG, Junfan, Shenzhen, Guangdong 518129 (CN)
(74) Representative: Gill Jennings & Every LLP
(86) International application number: PCT/CN2023/085059
(87) International publication number: WO 2024/197697

(57) **Abstract**

This application discloses a communication method and apparatus, to ensure transmission continuity of a data service corresponding to a data service task. In the method, a data control apparatus receives first information from a target network apparatus or a source network apparatus, where the first information is used to request to determine routing information of a data service task between a plurality of data processing apparatuses; and sends second information to the target network apparatus, where the second information is used to determine a next-hop data processing apparatus of the data service task after a first data processing apparatus. The data service task is associated with a terminal apparatus, the target network apparatus is a target network apparatus of a cell handover performed by the terminal apparatus, the first data processing apparatus in the plurality of data processing apparatuses is disposed in the target network apparatus, the source network apparatus is a source network apparatus of the cell handover performed by the terminal apparatus, and the next-hop data processing apparatus is one of the plurality of data processing apparatuses other than the first data processing apparatus.

## Description

### TECHNICAL FIELD

This application relates to the field of communication technologies, and in particular, to a communication method and apparatus.

### BACKGROUND

Data is generated, flows, and is consumed in a communication network, and plays a significant role. With development of a network scale, a new technology, an application, and the like, data in the network becomes more and becomes more important. Therefore, a complete service architecture is required to efficiently use data throughout an entire lifecycle including data generation, collection, storage, transmission, processing, analysis, exchange, and sharing. A data service is a service that provides data processing such as data collection, data preprocessing, data transmission, data release, or data analysis, meets requirements of data laws and regulations, can consider both data sharing and security, and provides data as a service product.

A data service task is a series of data services provided for implementing a specific data service. The data service task supports any topology and associated computing. Usually, a plurality of data processing apparatuses configured to execute the data service task need to be preconfigured, and routing information of the data service task between the plurality of data processing apparatuses needs to be preconfigured, to ensure data transmission continuity of the data service task. A network apparatus may serve as a data processing apparatus and execute the data service task. The terminal apparatus has mobility, and may trigger the terminal apparatus to be handed over from a cell provided by a source network apparatus to a cell provided by a target network apparatus. The target network apparatus may need to replace the source network apparatus to execute the data service task. In this case, the plurality of data processing apparatuses that execute the data service task change, and the preconfigured routing information is no longer applicable. Consequently, transmission continuity of the data service corresponding to the data service task cannot be ensured.

### SUMMARY

This application provides a communication method and apparatus, to ensure transmission continuity of a data service corresponding to a data service task.

According to a first aspect, this application provides a communication method. The method may be performed by a data control apparatus, or may be performed by a component in the data control apparatus. This is not limited. In the method, the data control apparatus receives first information from a target network apparatus or a source network apparatus, where the first information is used to request to determine routing information of a data service task between a plurality of data processing apparatuses; and sends second information to the target network apparatus, where the second information is used to determine a next-hop data processing apparatus of the data service task after a first data processing apparatus. The data service task is associated with a terminal apparatus, the target network apparatus is a target network apparatus of a cell handover performed by the terminal apparatus, the first data processing apparatus in the plurality of data processing apparatuses is disposed in the target network apparatus, the source network apparatus is a source network apparatus of the cell handover performed by the terminal apparatus, and the next-hop data processing apparatus is one of the plurality of data processing apparatuses other than the first data processing apparatus. The plurality of data processing apparatuses are configured to execute the data service task.

Optionally, the data control apparatus is a data orchestration apparatus or a component in the data orchestration apparatus. The data processing apparatus is a data agent apparatus, or a component in the data agent apparatus.

In the foregoing embodiment, the terminal apparatus performs the cell handover between network apparatuses, and the data control apparatus sends the second information to the target network apparatus in response to the first information. The second information is used to determine the next-hop data processing apparatus of the data service task after the first data processing apparatus. Therefore, after the terminal apparatus completes the cell handover, the target network apparatus may determine the next-hop data processing apparatus based on the second information, to implement transmission and processing of a data service corresponding to the data service task. In this way, a problem that preconfigured routing information is not applicable because the terminal apparatus performs the cell handover between the network apparatuses can be resolved, and transmission continuity of the data service can be ensured.

In a possible implementation, the second information is identification information of a first data pipeline, and the first data pipeline is used to transmit data of the data service task after the terminal apparatus successfully performs the cell handover. The data control apparatus may further send third information to the source network apparatus and the target network apparatus. The third information indicates a correspondence between the identification information of the first data pipeline and identification information of a second data pipeline, and the second data pipeline is used to transmit the data of the data service task before the terminal apparatus performs the cell handover.

In the foregoing implementation, the data control apparatus sends information about a correspondence between identification information of a data pipeline before the handover and identification information of a data pipeline after the handover to the source network apparatus and the target network apparatus. In this way, the source network apparatus may send, to the target network apparatus based on the correspondence, the data that is of the data service task and that is buffered by the source network apparatus in a process in which the terminal apparatus performs the cell handover, so that transmission and processing of the data of the data service task in the cell handover process can be implemented.

In a possible implementation, the plurality of data processing apparatuses may further include a second data processing apparatus, and the second data processing apparatus is one of at least one start node that executes the data service task. The data control apparatus may further send the identification information of the first data pipeline and the third information to the second data processing apparatus. Optionally, the plurality of data processing apparatuses are deployed (or disposed) based on a tree network topology, and the start node is a data processing apparatus corresponding to a leaf node in the tree network topology.

In the foregoing implementation, the data control apparatus may send the identification information of the first data pipeline and the third information to the start node, so that the start node implements transmission of the data of the data service task in the cell handover process.

In a possible implementation, the second information is the routing information, the plurality of data processing apparatuses further include a second data processing apparatus, and the second data processing apparatus is one of at least one start node that executes the data service task. The data control apparatus may further send the routing information to the second data processing apparatus. Optionally, the plurality of data processing apparatuses are deployed (or disposed) based on a tree network topology, and the start node is a data processing apparatus corresponding to a leaf node in the tree network topology.

In the foregoing implementation, the data control apparatus sends the routing information to a start node other than the target network apparatus. In this way, transmission continuity of the data service corresponding to the data service task in the tree network topology can be implemented.

In a possible implementation, the second information is information about the next-hop data processing apparatus, the plurality of data processing apparatuses further include a third data processing apparatus, and the third data processing apparatus is one of the plurality of data processing apparatuses other than an end node that executes the data service task. The data control apparatus may further send fourth information to the third data processing apparatus. The fourth information is information about a next-hop data processing apparatus of the data service task after the third data processing apparatus. Optionally, the plurality of data processing apparatuses are deployed (or disposed) based on a tree network topology, and the end node is a data processing apparatus corresponding to a root node in the tree network topology.

In the foregoing implementation, all remaining data processing apparatuses other than the end node in the plurality of data processing apparatuses may determine information about a next-hop data processing apparatus after the remaining data processing apparatuses, so that transmission of the data of the data service task can be implemented after the cell handover is completed.

In a possible implementation, before sending the second information to the target network apparatus, the data control apparatus may further receive fifth information from the target network apparatus or an access management apparatus. The fifth information is used to trigger the data control apparatus to send the second information.

In a possible implementation, the second information is the information about the next-hop data processing apparatus; or
the second information is the routing information; or
the second information is the identification information of a first data pipeline, and the first data pipeline is used to transmit the data of the data service task after the terminal apparatus successfully performs the cell handover.

According to a second aspect, this application provides a communication method. The method may be performed by a target network apparatus of a cell handover performed by a terminal apparatus, or may be performed by a component in the target network apparatus. This is not limited. In the method, the target network apparatus receives second information from a data control apparatus, where the data control apparatus is configured to determine routing information of a data service task between a plurality of data processing apparatuses, the plurality of data processing apparatuses are configured to execute the data service task, a first data processing apparatus in the plurality of data processing apparatuses is disposed in the target network apparatus, and the data service task is associated with the terminal apparatus; and determines a next-hop data processing apparatus of the data service task after the first data processing apparatus based on the second information, where the next-hop data processing apparatus is one of the plurality of data processing apparatuses other than the first data processing apparatus.

Optionally, the data control apparatus is a data orchestration apparatus or a component in the data orchestration apparatus. The data processing apparatus is a data agent apparatus, or a component in the data agent apparatus.

In a possible implementation, before receiving the second information from the data control apparatus, the target network apparatus may further receive sixth information from a source network apparatus, where the sixth information is used to request the terminal apparatus to be handed over to a cell provided by the target network apparatus, and the sixth information includes identification information of the data service task; and send first information to the data control apparatus based on the sixth information, where the first information is used to request the data control apparatus to determine the routing information of the data service task between the plurality of data processing apparatuses.

In a possible implementation, the target network apparatus may further receive a first data packet from the source network apparatus and the identification information of the data service task; execute the data service task for data carried in the first data packet, to obtain a second data packet; and send the second data packet to the next-hop data processing apparatus.

In a possible implementation, the second information is identification information of a first data pipeline, and the first data pipeline is used to transmit data of the data service task after the terminal apparatus successfully performs the cell handover. The target network apparatus may further receive third information from the data control apparatus. The third information indicates a correspondence between the identification information of the first data pipeline and identification information of a second data pipeline, and the second data pipeline is used to transmit the data of the data service task before the terminal apparatus performs the cell handover. That the target network apparatus receives the first data packet from the source network apparatus may be as follows: The target network apparatus receives the first data packet, the identification information of the data service task, and the identification information of the second data pipeline from the source network apparatus. That the target network apparatus sends the second data packet to the next-hop data processing apparatus may be as follows: The target network apparatus sends the second data packet to the next-hop data processing apparatus based on the identification information of the second data pipeline and the third information.

In a possible implementation, the target network apparatus may further receive seventh information from the source network apparatus before the terminal apparatus successfully performs the cell handover, where the seventh information indicates to transmit the data of the data service task at a data forwarding control protocol layer based on a sequence number; and send eighth information to the terminal apparatus after the terminal apparatus successfully performs the cell handover, where the eighth information indicates to stop transmitting the data of the data service task at the data forwarding control protocol layer based on the sequence number.

In the foregoing implementation, in a process in which the terminal apparatus performs the cell handover, reliable transmission may be performed on the data of the data service task between the terminal apparatus and the source network apparatus, so that a problem that the data of the data service task is lost because the terminal apparatus performs the cell handover between network apparatuses can be reduced.

In a possible implementation, the target network apparatus may further send fifth information to the data control apparatus after the terminal apparatus successfully performs the cell handover. The fifth information is used to trigger the data control apparatus to send the second information.

In a possible implementation, the second information is information about the next-hop data processing apparatus; or
the second information is the routing information; or
the second information is the identification information of a first data pipeline, and the first data pipeline is used to transmit the data of the data service task after the terminal apparatus successfully performs the cell handover.

According to a third aspect, this application provides a communication method. The method may be performed by a source network apparatus of a cell handover performed by a terminal apparatus, or may be performed by a component in the source network apparatus. In the method, the source network apparatus sends sixth information to a target network apparatus, where the sixth information is used to request the terminal apparatus to be handed over to a cell provided by the target network apparatus, and the sixth information includes identification information of a data service task associated with the terminal apparatus; and sends first information to a data control apparatus, where the first information is used to request the data control apparatus to determine routing information of the data service task between a plurality of data processing apparatuses, the plurality of data processing apparatuses are configured to execute the data service task, and a first data processing apparatus in the plurality of data processing apparatuses is disposed in the target network apparatus.

In a possible implementation, the source network apparatus may further receive a first data packet from the terminal apparatus and the identification information of the data service task; buffer the first data packet based on the identification information of the data service task; and send the first data packet and the identification information of the data service task to the target network apparatus after the terminal apparatus successfully performs the cell handover. In this way, in a process in which the terminal apparatus performs the cell handover, the source network apparatus may buffer data of the data service task from the terminal apparatus, and send the data to the target network apparatus after the cell handover succeeds, so that a problem that the data of the data service task is lost because the terminal apparatus performs the cell handover between network apparatuses can be reduced.

In a possible implementation, the source network apparatus may further receive third information from the data control apparatus. The third information indicates a correspondence between identification information of a first data pipeline and identification information of a second data pipeline, the first data pipeline is used to transmit data of the data service task after the terminal apparatus successfully performs the cell handover, and the second data pipeline is used to transmit the data of the data service task before the terminal apparatus performs the cell handover. That the source network apparatus sends the first data packet and the identification information of the data service task to the target network apparatus after the terminal apparatus successfully performs the cell handover may be as follows: The source network apparatus sends the first data packet, the identification information of the data service task, and the identification information of the second data pipeline to the target network apparatus based on the third information.

In a possible implementation, before the terminal apparatus successfully performs the cell handover, the source network apparatus may further send seventh information to the target network apparatus, where the seventh information indicates to transmit the data of the data service task at a data forwarding control protocol layer based on a sequence number; send ninth information to the terminal apparatus, where the ninth information indicates to transmit the data of the data service task at the data forwarding control protocol layer based on the sequence number; and transmit the data of the data service task with the terminal apparatus at the data forwarding control protocol layer based on the sequence number.

In a possible implementation, after the terminal apparatus successfully performs the cell handover, the source network apparatus may further receive eighth information from the target network apparatus. The eighth information indicates to stop transmitting the data of the data service task at the data forwarding control protocol layer based on the sequence number.

In a possible implementation, the source network apparatus may further send tenth information to the terminal apparatus. The tenth information indicates the terminal apparatus to establish a data plane bearer for the data service task. In this way, the terminal apparatus may establish the data plane bearer of the data service task, and the terminal apparatus still executes the data service task after the cell handover succeeds.

According to a fourth aspect, this application further provides a communication apparatus. The communication apparatus is configured to perform the method according to any one of the first aspect and the possible implementations of the first aspect. The communication apparatus is, for example, a data control apparatus, or a functional module in the data control apparatus, for example, a baseband apparatus or a chip system. In a possible implementation, the communication apparatus includes a baseband apparatus and a radio frequency apparatus.

In another possible implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional unit, the functional unit is referred to as a transceiver unit, and the functional unit can implement the sending function and the receiving function. Alternatively, the sending unit and the receiving unit may be different functional units, and the transceiver unit is a general term for these functional units.

According to a fifth aspect, this application provides a communication apparatus. The communication apparatus is configured to perform the method according to any one of the second aspect and the possible implementations of the second aspect. The communication apparatus is, for example, a target network apparatus, or a functional module in the target network apparatus, for example, a baseband apparatus or a chip system. In a possible implementation, the communication apparatus includes the baseband apparatus and a radio frequency apparatus.

In another possible implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional unit, the functional unit is referred to as a transceiver unit, and the functional unit can implement the sending function and the receiving function. Alternatively, the sending unit and the receiving unit may be different functional units, and the transceiver unit is a general term for these functional units.

According to a sixth aspect, this application provides a communication apparatus. The communication apparatus is configured to perform the method according to any one of the third aspect and the possible implementations of the third aspect. The communication apparatus is, for example, a source network apparatus, or a functional module in the source network apparatus, for example, a baseband apparatus or a chip system. In a possible implementation, the communication apparatus includes the baseband apparatus and a radio frequency apparatus.

According to a seventh aspect, this application further provides a communication apparatus. The apparatus includes a processor, the processor is coupled to a memory, the memory stores instructions, and when the instructions are run by the processor, the processor is enabled to perform the method according to any one of the first aspect and the possible implementations of the first aspect, or perform the method according to any one of the second aspect and the possible implementations of the second aspect, or perform the method according to any one of the third aspect and the possible implementations of the third aspect.

According to an eighth aspect, this application further provides a communication apparatus. The apparatus includes a logic circuit, and the logic circuit is configured to: be coupled to an input/output interface, and transmit data through the input/output interface, to perform the method according to any one of the first aspect and the possible implementations of the first aspect, or perform the method according to any one of the second aspect and the possible implementations of the second aspect, or perform the method according to any one of the third aspect and the possible implementations of the third aspect.

According to a ninth aspect, this application further provides a communication system. The communication system includes a data control apparatus and a plurality of data processing apparatuses, the plurality of data processing apparatuses are configured to execute a data service task, a first data processing apparatus in the plurality of data processing apparatuses is disposed in a target network apparatus, the data processing apparatus is configured to perform the method according to any one of the first aspect and the possible implementations of the first aspect, and the target network apparatus is configured to perform the method according to any one of the second aspect and the possible implementations of the second aspect.

Optionally, the system may further include a source network apparatus, and the source network apparatus is configured to perform the method according to any one of the third aspect and the possible implementations of the third aspect.

According to a tenth aspect, this application further provides a computer-readable storage medium. The computer-readable storage medium stores a computer program (which may also be referred to as code or instructions). When the computer program is run on a computer, the computer is enabled to perform the method according to any one of the first aspect to the third aspect and any possible implementation of the first aspect to the third aspect.

According to an eleventh aspect, this application further provides a computer program product. The computer program product includes a computer program (which may also be referred to as code or instructions). When the computer program is run, a computer is enabled to perform the method according to any one of the first aspect to the third aspect and any possible implementation of the first aspect to the third aspect.

For beneficial effect brought by the second aspect to the eleventh aspect, refer to descriptions of beneficial effect in any one of the first aspect and the possible implementations of the first aspect. Details are not described herein again.

### BRIEF DESCRIPTION OF DRAWINGS

FIG. 1 is a diagram of an architecture of a communication system;
FIG. 2 is a diagram of a function of a data plane;
FIG. 3 is a diagram of an architecture of another data system;
FIG. 4a is a diagram of a network topology of a plurality of data processing apparatuses;
FIG. 4b is another diagram of a network topology of a plurality of data processing apparatuses;
FIG. 5 is a schematic flowchart of a communication method according to an embodiment of this application;
FIG. 6 is a diagram of three routing manners according to an embodiment of this application;
FIG. 7 is a diagram of a transmission path according to an embodiment of this application;
FIG. 8 is a schematic flowchart of another communication method according to an embodiment of this application;
FIG. 9 is a diagram of a structure of a communication protocol stack according to an embodiment of this application;
FIG. 10 is a schematic flowchart of another communication method according to an embodiment of this application;
FIG. 11 is a schematic flowchart of another communication method according to an embodiment of this application;
FIG. 12 is a schematic flowchart of another communication method according to an embodiment of this application;
FIG. 13 is a schematic flowchart of another communication method according to an embodiment of this application;
FIG. 14 is a schematic flowchart of still another communication method according to an embodiment of this application;
FIG. 15 is a schematic flowchart of still another communication method according to an embodiment of this application;
FIG. 16 is a diagram of a structure of a communication apparatus according to an embodiment of this application;
FIG. 17 is a diagram of a structure of another communication apparatus according to an embodiment of this application; and
FIG. 18 is a diagram of a structure of still another communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

A network architecture and a service scenario that are described in this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

In embodiments of this application, "a plurality of" may mean two or more. In view of this, in embodiments of this application, "a plurality of" may also be understood as "at least two". "At least one" may be understood as one or more, for example, one, two, or more. For example, "including at least one" means including one, two, or more, for example, including at least one of A, B, and C. In this case, A, B, C, A and B, A and C, B and C, or A, B and C may be included. The term "and/or" describes an association relationship for describing associated objects and represents that three relationships may exist specifically. For example, A and/or B may represent the following three cases: Only A exists, both A and B exist, and only B exists. In addition, unless otherwise specified, the character "/" usually indicates an "or" relationship between the associated objects.

In addition, the terms "system" and "network" in embodiments of this application may be used interchangeably, and "according to" and "based on" may be used interchangeably. In embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the term "example" is for presenting a concept in a specific manner. In embodiments of this application, "of (of)", "relevant (corresponding, relevant)", and "corresponding (corresponding)" may be interchangeably used sometimes. It should be noted that meanings expressed by the terms are consistent when differences are not emphasized.

Ordinal numerals such as "first" and "second" in embodiments of this application are used to distinguish between different objects, and are not intended to limit a sequence, a time sequence, a priority, or an importance degree of a plurality of objects. For example, first information to eleventh information in embodiments of this application are used to distinguish 11 pieces of information, and do not limit priorities, importance degrees, or the like of the 11 pieces of information. For another example, a first data processing apparatus, a second data processing apparatus, and a third data processing apparatus in embodiments of this application are configured to distinguish the three data processing apparatuses, and are not limited to priorities, importance degrees, or the like of the three data processing apparatuses.

Embodiments of this application are presented around a system including a plurality of devices, components, modules, and the like. It should be understood that the system may include other devices, components, modules, and the like that are not mentioned, or may include only a part of devices, components, modules, and the like that are mentioned in the embodiments.

The term "apparatus" in embodiments of this application may be replaced with "device", "entity", "network element", "node", or the like.

First, a communication system applicable to embodiments of this application is described below.

The technical solutions in embodiments of this application may be applied to various communication systems such as a universal mobile telecommunications system (universal mobile telecommunications system, UMTS), a wireless local area network (wireless local area network, WLAN), a wireless fidelity (wireless fidelity, Wi-Fi) system, a wired network, a vehicle to everything (vehicle to everything, V2X) communication system, a device-to-device (device-to-device, D2D) communication system, an internet of vehicles communication system, a 4th generation (4th generation, 4G) mobile communication system (for example, a long term evolution (long term evolution, LTE) system), a worldwide interoperability for microwave access (worldwide interoperability for microwave access, WiMAX) communication system, a 5th generation (5th generation, 5G) mobile communication system (for example, a new radio (new radio, NR) system), a future communication system (for example, a 6th generation (6th generation, 6G) mobile communication system), or another similar communication system. This is not limited.

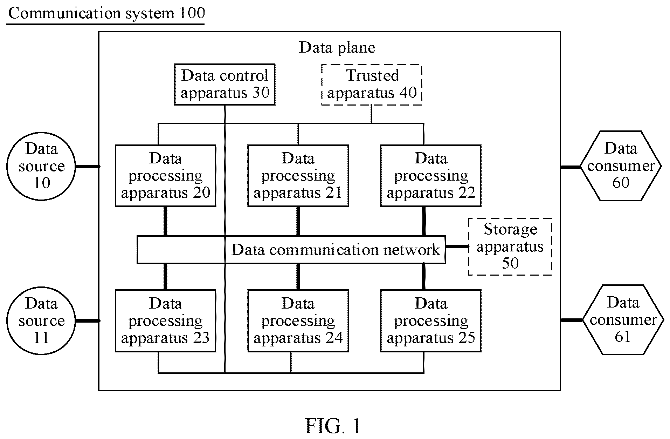

In embodiments of this application, the communication system shown in FIG. 1 is used as an example for description. When the technical solutions in embodiments of this application are applied to another communication system, a device, a component, a module, and the like in the embodiments may be replaced with a corresponding device, component, and module in the another communication system. This is not limited.

FIG. 1 is a diagram of an architecture of a communication system. As shown in FIG. 1, a communication system 100 includes a data source, a data plane, and a data consumer.

The data source may be a service data generation apparatus. A quantity of data sources is not limited in this embodiment of this application. In FIG. 1, a data source 10 and a data source 11 are used as examples. The data consumer may be an apparatus for using processed data. A quantity of data consumers is not limited in this embodiment of this application. In FIG. 1, a data consumer 60 and a data consumer 61 are used as examples. The data plane is used for data processing such as data collection, data storage, data preprocessing, data distribution, data analysis, and a data service application programming interface (application programming interface, API).

For example, the data plane may include a data processing apparatus and a data control apparatus 30. A quantity of data processing apparatuses and a quantity of data control apparatuses are not limited in this embodiment of this application. In FIG. 1, a data processing apparatus 20, a data processing apparatus 21, a data processing apparatus 22, a data processing apparatus 23, a data processing apparatus 24, and a data processing apparatus 25 are used as examples.

Optionally, the data plane may further include a trusted apparatus 40, configured to implement data trustworthiness and protect data from being attacked, which is shown by a dashed line in FIG. 1.

Optionally, the data plane may further include a storage apparatus 50, configured to store data, which is shown by a dashed line in FIG. 1. For example, when a large amount of data needs to be stored, or when data needs to be stored for a long period of time, the storage apparatus 50 may be used as a storage extension of the data processing apparatus. This is not limited. The storage apparatus 50 is, for example, a data storage function (data storage function, DSF) network element. This is not limited in this application. Deployment of the storage apparatus 50 is not limited in this embodiment of this application.

A method provided in embodiments of this application may further relate to a device or a communication node that is not shown in FIG. 1. Certainly, the communication method provided in embodiments of this application may alternatively include only a part of devices or communication nodes shown in FIG. 1. This is not limited in embodiments of this application. For example, the communication system 100 may further include a service request apparatus, configured to request a data service, which is not shown in FIG. 1. The data request apparatus may be an application, an application server, a network service network element, or the like. The application may be, for example, an application that is of an operator (or a communication service provider (communication service provider, CSP)) and that is used for network planning and optimization, and/or artificial intelligence (artificial intelligence, AI) of a network, or the like, or may be an application outside a mobile communication network (which may also be referred to as a third-party application). Deployment of the service request apparatus is not limited in this embodiment of this application.

It may be understood that names (for example, the data control apparatus or the data processing apparatus) shown in the foregoing descriptions or figure are merely examples. The foregoing apparatuses may alternatively have other names. This is not limited in this application.

The foregoing network architecture used in embodiments of this application is merely an example for description, and a network architecture applicable to embodiments of this application is not limited thereto. Any network architecture that can implement functions of all or a part of the foregoing devices is applicable to embodiments of this application.

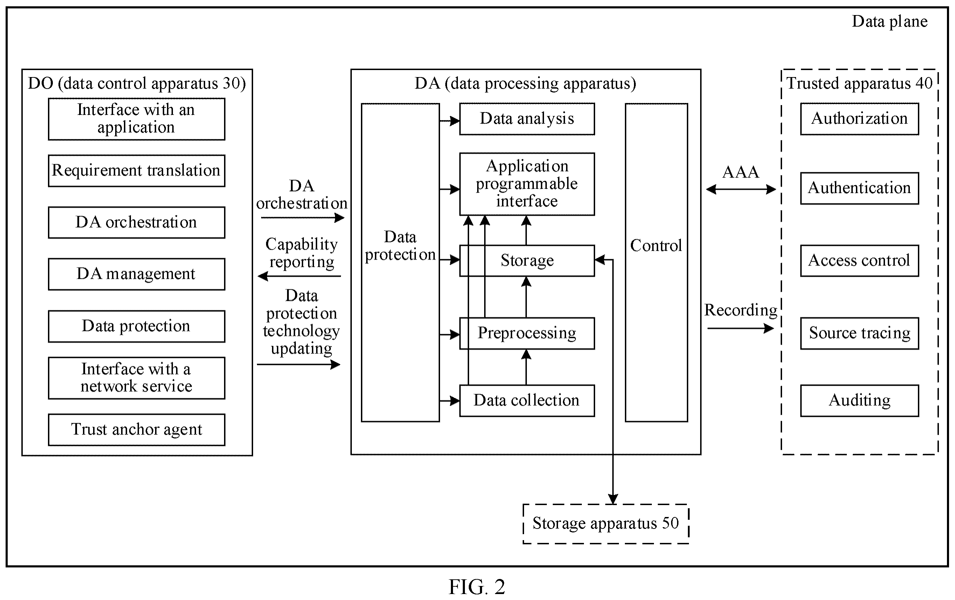

For example, FIG. 2 is a diagram of a function of a data plane. The following describes the data processing apparatus, the data control apparatus 30, and the trusted apparatus 40 mentioned above with reference to FIG. 2.
(1) The data processing apparatus may be a data agent (data agents, DA) apparatus, or a component in the DA apparatus, and is configured to: provide a data service, and execute a data service task. Optionally, the data processing apparatus may also be referred to as a data processing device, a data agent apparatus, a data agent device, a data agent entity, a data agent network element, or the like. This is not limited. Unless otherwise specified, the following provides an example in which the data processing apparatus is a DA apparatus, that is, the data processing apparatus can implement a function of the DA apparatus.

The DA apparatus may be deployed in a centralized manner, or may be deployed in a distributed manner. This is not limited. The DA apparatus is flexibly deployed in a distributed manner based on a requirement, may meet diversified and flexible data service requirements, and may reduce data collection overheads. Optionally, the DA apparatus may be deployed in any core network (core network, CN) apparatus, any transfer network (transfer network, TN) apparatus, any radio access network (radio access network, RAN) apparatus, or another apparatus/device/network element (for example, an operation administration and maintenance (operation administration and maintenance, OAM) network element). Alternatively, the DA apparatus may be independently deployed. For example, the DA apparatus may be independently deployed in a network as a network function (network function, NF) or a network element. In an example, the DA apparatus may be evolved from a network data analysis function (network data analysis function, NWDAF) network element, and can implement a function of the NWDAF network element and support various data analysis technologies. In another example, the DA apparatus and an NWDAF network element may alternatively be separately deployed. For example, the NWDAF network element invokes data services in terms of data collection, preprocessing, or storage of a data agent through an API.

It may be understood that when there are a plurality of DA apparatuses in a communication system, a part of the DA apparatuses may be built in a communication apparatus (which is any core network apparatus, any terminal apparatus, any access network apparatus, or another communication apparatus), and a remaining part of the DA apparatuses are independently deployed; or a plurality of DA apparatuses are all built in a communication apparatus; or a plurality of DA apparatuses are all independently deployed. This is not limited in this embodiment of this application.

For example, functions that may be implemented by the DA apparatus (namely, the data processing apparatus) include but are not limited to one or more of the following: interaction with a data orchestration (data orchestration, DO) apparatus (for example, reporting a capability to the DO apparatus), interaction with the trusted apparatus 40, control, data collection, data preprocessing, data storage, data distribution, an application programmable interface, data analysis, data protection, and the like, as shown in FIG. 2.

It may be understood that different DA apparatuses may have same or different data service capabilities, and may implement same or different functions. The DA apparatus may establish a logical network topology to form a dynamic data pipeline (data pipeline) (or referred to as a data flow, service logic, a functional chain, an operation chain, or the like). The data pipeline includes functions corresponding to the plurality of DA apparatuses based on a service requirement, and an output of a current function is an input of a next function, to implement transmission of a corresponding data service task.

It may be understood that, in this embodiment of this application, the DA apparatus may be divided into functional modules based on the foregoing functions or the following method embodiments. For example, each functional module may be obtained through division based on each corresponding function, or two or more functions may be integrated into one module. The integrated module may be implemented in a form of hardware, or may be implemented in a form of a software functional module. In embodiments of this application, functional division or division into modules is an example, and is merely a logical functional division. In an actual implementation, another division manner may be used.

It should be noted that the DA apparatus may be a logical entity or a physical entity. This is not limited.

(2) The data control apparatus 30 may be a DO apparatus or a component in the DO apparatus. This is not limited. For example, the DO apparatus includes a data orchestrator (data orchestrator) and a data controller (data controller). The data control apparatus 30 may be a data controller in the DO apparatus. This is not limited. Optionally, the data control apparatus 30 may also be referred to as a data control device, a data control network element, a data orchestration apparatus, a data orchestration network element, a data orchestration entity, a data orchestration device, or the like. This is not limited. Unless otherwise specified, the following provides an example in which the data control apparatus 30 is a DO apparatus, that is, the data control apparatus can implement a function of the DO apparatus.

The DO apparatus may be deployed in any core network apparatus, any transfer network apparatus, any access network apparatus, or another apparatus/device/network element (for example, an OAM network element), or the DO apparatus may be independently deployed. For example, the DO apparatus may be hierarchically deployed on a CN side or a RAN side. For example, the DO apparatus may be deployed in a network service (network service, NS) network element. For another example, the DO apparatus may be independently deployed in a network as an NF or a network element. In actual deployment, one or more NFs may form one network element.

For example, functions that may be implemented by the DO apparatus include but are not limited to one or more of the following: an interface with an application, requirement translation, DA orchestration (for example, orchestrating functions of each DA apparatus, so that the DA apparatus performs a corresponding operation and establishes a dynamic logical network topology to implement a corresponding service requirement), DA management, data protection, an interface with a network service network element, a trust anchor agent, and the like, as shown in FIG. 2.

As mentioned above, the DO apparatus may include the data orchestrator and the data controller. For example, the DO apparatus may be subdivided into the data orchestrator and the data controller based on real-time performance and a cross-domain situation of a task. For example, the data orchestrator and the data controller collaboratively achieve flexibility and programmability of the data pipeline. The following describes functions of the data orchestrator and the data controller. It should be understood that the DO apparatus can implement functions of the data orchestrator and implement functions of the data controller.

For example, the data orchestrator is mainly responsible for coarse-grained and non-real-time data orchestration. For example, the data orchestrator mainly has one or more of the following functions: receiving a data service request, and converting the data service request into a data pipeline combination request; cooperating with another network service, for example, cooperating with a computational power network service, where the computational power network service orchestrates computational power, and the data orchestrator orchestrates data; and implementing cross-domain coarse-grained data pipeline orchestration based on the data service request and a service capability of the DA apparatus. Alternatively, the data orchestrator may be built with a data security and privacy protection technology repository (data protection technology repository, DPTR), for example, including differential privacy, homomorphic encryption, secure multi-party computing, or zero-knowledge proof technologies, to provide data security and privacy protection capabilities, and empower data protection technologies (data protection technology, DPT) to the DA apparatus based on a requirement.

For example, the data controller is mainly responsible for a fine-grained real-time orchestration task. For example, the data controller mainly has one or more of the following functions: implementing fine-grained DA apparatus orchestration; combining data pipelines in a local domain based on a capability of the DA apparatus and the data service request, to implement real-time and efficient service management; receiving a capability report of the DA apparatus and implementing registration and revocation functions of the DA apparatus; and implementing real-time supervision of the DA apparatus by monitoring a heartbeat of a data agent. Alternatively, the data controller may be built with a trust anchor client (trust anchor client, TAC), to initiate a request for security mechanisms such as authentication, authorization, and access control to a trust anchor agent (trust anchor agent, TAA), and apply for source tracing and auditing services for data access, and the like.

It may be understood that, in this embodiment of this application, the foregoing functions of the DO apparatus may be integrated into one module based on the foregoing functions or the following method embodiments. The integrated module may be implemented in a form of hardware, or may be implemented in a form of a software functional module. In embodiments of this application, functional division or division into modules is an example, and is merely a logical functional division. In an actual implementation, another division manner may be used.

It should be noted that the DO apparatus may be a logical entity or a physical entity. This is not limited.

(3) For example, the trusted apparatus 40 may be a trust anchor (trust anchor, TA), and may provide a security service such as authentication authorization accounting (authentication authorization accounting, AAA), and store data that cannot be tampered with, a public key of user equipment (user equipment, UE) or a network element (network element, NE), data that has a small data amount and that cannot be tampered with, or other important data that cannot be tampered with. Deployment of the trusted apparatus 40 is not limited in this embodiment of this application. For example, functions that may be implemented by the trusted apparatus 40 include but are not limited to one or more of the following: authorization, authentication, access control, source tracing, or auditing, as shown in FIG. 2.

The DO apparatus may be deployed in a core network apparatus, and the DA apparatus may also be deployed in a core network apparatus. The core network apparatus is located on a network side of the communication system, and may be configured to provide a network service for an access network apparatus, a terminal apparatus, and the like. For example, the core network apparatus may include but is not limited to one or more of the following: a mobility management apparatus, a session management apparatus, a user plane apparatus, a policy control apparatus, a network exposure apparatus, an application apparatus, an NWDAF, OAM, and/or the like.

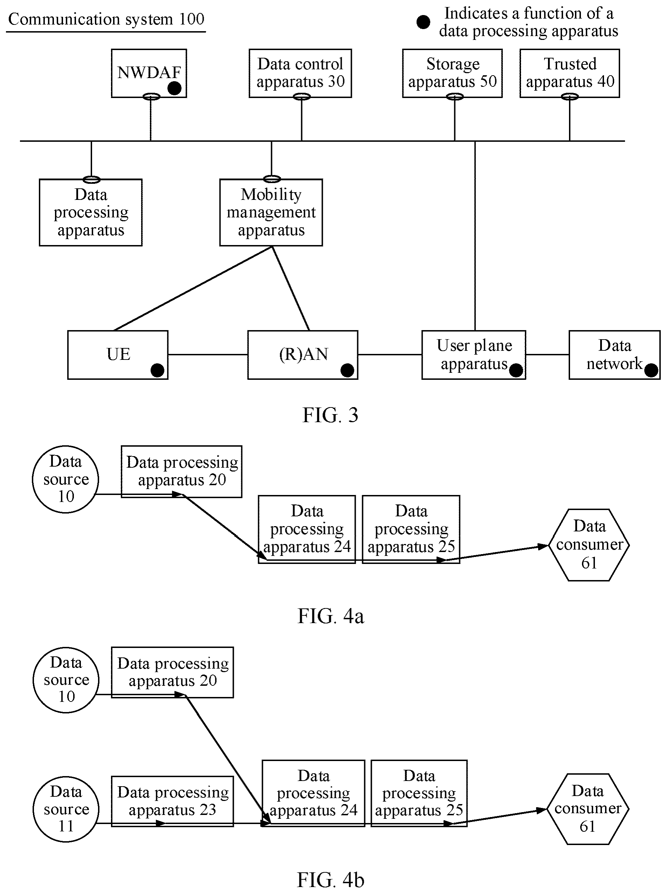

For example, FIG. 3 is a diagram of another architecture of a communication system 100. Compared with that in FIG. 1, the communication system 100 shown in FIG. 3 further includes a mobility management apparatus, and a data source and a data consumer are not shown in FIG. 3. In FIG. 3, a data control apparatus 30 is independently deployed. A part of data processing apparatuses are independently deployed, and the other part of the data processing apparatuses are separately deployed (or disposed) in a terminal apparatus, a network apparatus, an NWDAF, a user plane apparatus, and a data network.

It should be understood that FIG. 3 is used as an example and does not limit specific deployment of the data control apparatus 30 and the data processing apparatus. For example, the data control apparatus 30 may alternatively be deployed in a core network apparatus. For example, the data processing apparatus may alternatively not be deployed in the terminal apparatus. For another example, the data processing apparatus may alternatively be deployed in another core network apparatus.

The following describes a part of apparatuses used in this embodiment of this application.

The mobility management apparatus is mainly configured to perform mobility management, access management, and the like. In a 5G mobile communication system, an access management network element may be an access and mobility management function (access and mobility management function, AMF) network element, and mainly performs functions such as mobility management and access authentication/authorization. In addition, a mobility management network element may be further responsible for transferring a user policy between a terminal and a policy control apparatus.

The network apparatus may also be referred to as an access network apparatus, an access network device, a radio access network apparatus, an access network element, a base station, or the like, and can manage a radio resource, provide an access service for the terminal apparatus, and complete data forwarding between the terminal apparatus and a core network. For example, the network apparatus in this embodiment of this application may be any communication device that has a wireless sending and receiving function and that is configured to communicate with the terminal apparatus.

For example, the network apparatus may include but is not limited to one or more of the following: an evolved nodeB (evolved NodeB, eNB), a radio network controller (radio network controller, RNC), a nodeB (NodeB, NB), a base station controller (base station controller, BSC), a base transceiver station (base transceiver station, BTS), a home base station (home evolved NodeB, HeNB, or home NodeB, HNB), a next-generation base station in a 6th generation (6th generation, 6G) mobile communication system, an access network apparatus in an open access network (open RAN, ORAN) system or a module in the access network apparatus, a base station in a future mobile communication system or an access node in a Wi-Fi system, a baseband unit (baseBand unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), 5G (for example, a gNB in an NR system), one or a group of antenna panels (including a plurality of antenna panels) of a base station in a 5G system, a network node (for example, a baseband unit (BBU) or a distributed unit (distributed unit, DU)) that constitutes the gNB or the transmission point, a satellite, an uncrewed aerial vehicle, or the like.

In some deployments, the gNB may include a central unit (central unit, CU) and a DU. The gNB may further include an active antenna unit (active antenna unit, AAU). The CU implements a part of functions of the gNB, and the DU implements a part of functions of the gNB. For example, the CU is responsible for processing a non-real-time protocol and a service, and implements functions of a radio resource control (radio resource control, RRC) layer and a packet data convergence layer protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements a part of physical layer processing functions, radio frequency processing, and a function related to an active antenna. It may be understood that the network apparatus may be an apparatus including one or more of a CU node, a DU node, or an AAU node. In addition, the CU may be classified as an access network apparatus in an access network, or the CU may be classified as an access network apparatus in the core network. This is not limited in this application. In the ORAN system, the CU may also be referred to as an O-CU, the DU may also be referred to as an open (open, O)-DU, a CU-control plane (control plane, UP) may also be referred to as an O-CU-CP, a CU-user plane (user plane, UP) may also be referred to as an O-CU-UP, and a radio unit (radio unit, RU) may also be referred to as an O-RU.

The terminal apparatus is a terminal that accesses the communication system and that has a wireless sending and receiving function, or may be a chip or a chip system that may be disposed in the terminal. In this application, the terminal apparatus may also be referred to as a terminal device, a terminal, user equipment (user equipment, UE), an access terminal, a subscriber unit, a subscriber station, a mobile station, a remote station, a remote terminal, a mobile device, a user terminal, a wireless communication device, a user agent, a user apparatus, or the like.

For example, the terminal apparatus may be a mobile phone (mobile phone), a tablet computer (pad), an uncrewed aerial vehicle, a computer with a wireless sending and receiving function, customer premise equipment (customer premise equipment, CPE), a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, an uncrewed aerial vehicle, a terminal in a 5G network, a terminal in a future evolution network, or the like.

For another example, the terminal apparatus may be an express delivery terminal (for example, a device that can monitor a location of a cargo vehicle, or a device that can monitor a temperature and humidity of a cargo) in intelligent logistics, a wireless terminal (for example, a wearable device that can collect related data of poultry and livestock) in intelligent agriculture, a wireless terminal (for example, a smart elevator, a fire monitoring device, or a smart meter) in intelligent architecture, a wireless terminal (for example, a wearable device that can monitor a physiological status of a person or an animal) in intelligent healthcare, a wireless terminal (for example, an intelligent bus, an intelligent vehicle, a shared bicycle, a charging pile monitoring device, intelligent traffic lights, or an intelligent monitoring and intelligent parking device) in intelligent transportation, or a wireless terminal (for example, a vending machine, a self-service checkout machine, or an unmanned convenience store) in intelligent retail. For another example, the terminal apparatus in this application may be a vehicle-mounted module, a vehicle-mounted part, a vehicle-mounted chip, or a vehicle-mounted unit built in a vehicle as one or more parts or units, and the vehicle can implement the method in this application via the built-in vehicle-mounted module, vehicle-mounted part, vehicle-mounted chip, or vehicle-mounted unit. The terminal apparatus in this application may be a smart internet of things (smart internet of things, SIoT) terminal apparatus or a non-SIoT terminal apparatus, and has specific capabilities such as computing and storage. The non-SIoT terminal apparatus may collect data by using an internet of things gateway. For example, the non-SIoT terminal apparatus may be a terminal with a limited computing capability, for example, a sensor with a single function. Optionally, a data agent network element may be built in the SIoT terminal apparatus, or the SloT terminal apparatus may implement a function of a data agent network element.

The following describes technical features in embodiments of this application.

A data service task supports any topology and associated computing. Usually, a data control apparatus pre-orchestrates a plurality of data processing apparatuses that execute the data service task, and pre-configures routing information of the data service task between the plurality of data processing apparatuses, to ensure transmission continuity of a data service corresponding to the data service task. As mentioned above, the data processing apparatus may be disposed in a network apparatus to provide a data service. A terminal apparatus may access a core network by using the network apparatus. The terminal apparatus has mobility, and may trigger the terminal apparatus to be handed over from a cell provided by a source network apparatus (or a cell covered by the source network apparatus) to a cell provided by a target network apparatus (or a cell covered by the target network apparatus). The target network apparatus may need to replace the source network apparatus to execute the data service task. In this case, the plurality of data processing apparatuses that execute the data service task change, and the preconfigured routing information is no longer applicable. Consequently, transmission continuity of the data service corresponding to the data service task cannot be ensured.

For example, there is no association relationship between the terminal apparatus and the data service task (or the terminal apparatus is not bound to the data service task). In other words, an implementation of the data service task does not require a specific terminal apparatus, and is irrelevant to an identity of the terminal apparatus. In this case, after the terminal apparatus is handed over from the source network apparatus to the target network apparatus, the source network apparatus may select another terminal apparatus to replace the terminal apparatus, and the plurality of data processing apparatuses that execute the data service task do not change except for the terminal apparatus, that is, the preconfigured routing information may still be used, without affecting transmission continuity of the data service corresponding to the data service task.

For another example, there is an association relationship between the terminal apparatus and the data service task (or the terminal apparatus is bound to the data service task). In other words, an implementation of the data service task requires a specific terminal apparatus, and is relevant to an identity of the terminal apparatus. In this case, after the terminal apparatus is handed over from the source network apparatus to the target network apparatus, because the data service task is bound to the terminal apparatus, the target network apparatus replaces the source network apparatus to execute the data service task, and the plurality of data processing apparatuses that execute the data service task change, that is, the preconfigured routing information is no longer applicable. Consequently, transmission continuity of the data service corresponding to the data service task cannot be ensured.

In view of this, embodiments of this application provide a communication method and apparatus, to ensure transmission continuity of a data service corresponding to a data service task. The method may be applied to the communication system shown in FIG. 1 or FIG. 3, but this is not limited thereto. For example, the method may be further applied to a communication system such as V2X or D2D. The following first describes technical terms in embodiments of this application.

The data service is a service that provides data processing such as data collection, data preprocessing, data transmission, data release, data analysis, data storage, data privacy and security protection, data sharing or data transaction, data source tracing, and a data dictionary. It should be understood that a type of the data service is not limited in this embodiment of this application.

The data service task is a series of data services needed (or provided) for implementing a specific data service.

A source network apparatus is a source network apparatus of a cell handover performed by a terminal apparatus, and is configured to provide a network service for the terminal apparatus before the cell handover. For a specific implementation, refer to the foregoing content of the foregoing network apparatus. Details are not described again.

A target network apparatus is a target network apparatus of the cell handover performed by the terminal apparatus, and provides a network service for the terminal apparatus after the cell handover is completed. For a specific implementation, refer to the foregoing content of the network apparatus. Details are not described again.

A data processing apparatus is deployed (or disposed) in the source network apparatus; or no data processing apparatus is deployed in the source network apparatus. For example, in a scenario such as V2X or D2D, the data service corresponding to the data service task does not pass through a network apparatus. A data processing apparatus (for example, denoted as a first data processing apparatus) is deployed (or disposed) in the target network apparatus, to replace the source network apparatus to execute the data service task after the cell handover succeeds; or no data processing apparatus is deployed in the target network apparatus. For ease of understanding, the following provides descriptions by using an example in which a data processing apparatus is deployed in the source network apparatus and the first data processing apparatus is deployed in the target network apparatus.

The terminal apparatus may be a data source, or may be a requester of the data service task, or may further provide a data service, or may assume the foregoing plurality of roles, for example, is both the data source and the data service. A data processing apparatus may be deployed in the terminal apparatus, or no data processing apparatus may be deployed in the terminal apparatus. This is not limited. For a specific implementation of the terminal apparatus, refer to the foregoing content of the terminal apparatus. Details are not described again.

The cell handover in embodiments of this application may be a cell handover based on an Xn interface, or may be a cell handover based on an NG interface. This is not limited. The cell handover based on the Xn interface means that a connection is established between the source network apparatus and the target network apparatus, and a mobility management apparatus (for example, an AMF) may not need to participate in a cell handover process. The cell handover based on the NG interface means that no connection is established between the source network apparatus and the target network apparatus, and a mobility management apparatus needs to participate in a cell handover process. For meanings of the Xn interface and the NG interface, refer to meanings defined in the 3rd generation partnership project (3rd generation partnership project, 3GPP) standard protocol. This is not limited herein.

In embodiments of this application, a plurality of data processing apparatuses collaboratively execute the data service task. A data service provided by each of the plurality of data processing apparatuses is not limited in embodiments of this application. Unless otherwise specified, the plurality of data processing apparatuses in embodiments of this application do not include a data processing apparatus deployed in the terminal apparatus.

A network topology of the plurality of data processing apparatuses in embodiments of this application may be a bus network topology, a tree network topology, a mesh network topology, or the like. This is not limited. From a perspective of the network topology of the plurality of data processing apparatuses, the plurality of data processing apparatuses may include at least one start node and one end node. The at least one start node includes the first data processing apparatus deployed in the target network apparatus. The start node may also be referred to as a start data processing apparatus, an ingress node, an ingress data processing apparatus, or the like. This is not limited. The start node may be a data processing apparatus that is the first one to execute the data service task in the plurality of data processing apparatuses, or a data processing apparatus corresponding to a leaf node in the tree network topology. The end node may also be referred to as an end data processing apparatus, an egress node, an egress data processing apparatus, or the like. This is not limited. The end node may be a data processing apparatus that is the last one to execute the data service task in the plurality of data processing apparatuses, or a data processing apparatus corresponding to a root node in the tree network topology.

For example, a data control apparatus is the data processing apparatus 20, the data processing apparatus 24, and the data processing apparatus 25 in FIG. 1 that shows a configuration for the data service task, and a transmission path of service data corresponding to the data service task is: data source 10 -> data processing apparatus 20 -> data processing apparatus 24 -> data processing apparatus 25 -> data consumer 61, as shown in FIG. 4a. "->" indicates a transmission direction of the service data. In FIG. 4a, the data processing apparatus 20 is a start node, and the data processing apparatus 25 is an end node.

For another example, the data control apparatus is the data processing apparatus 20, the data processing apparatus 23, the data processing apparatus 24, and the data processing apparatus 25 in FIG. 1 that shows a configuration of the data service task, and a transmission path of service data corresponding to the data service task is: data source 10 -> data processing apparatus 20 -> data processing apparatus 24 -> data processing apparatus 25 -> data consumer 61, and data source 11 -> data processing apparatus 23 -> data processing apparatus 24 -> data processing apparatus 25 -> data consumer 61, as shown in FIG. 4b. "->" indicates a transmission direction of the service data. In FIG. 4b, the data processing apparatus 20, the data processing apparatus 23, the data processing apparatus 24, and the data processing apparatus 25 are disposed (or deployed) based on the tree network topology. The data processing apparatus 20 and the data processing apparatus 23 are start nodes, and the data processing apparatus 25 is an end node.

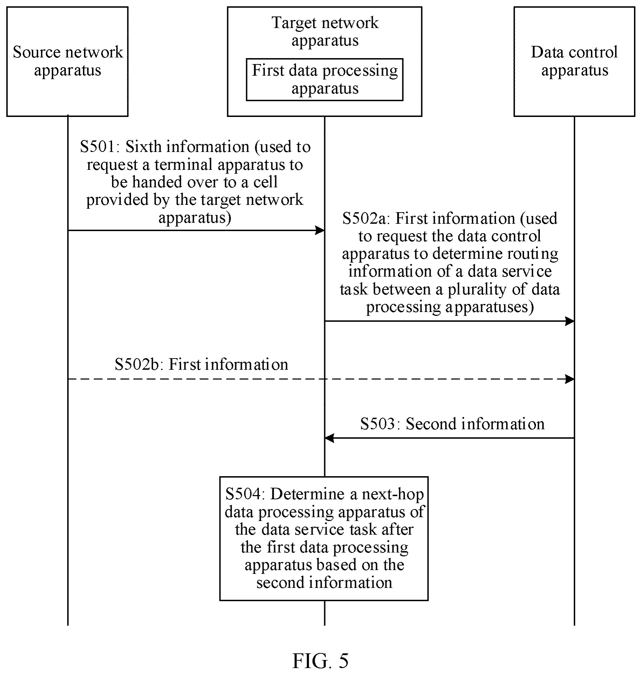

FIG. 5 is a schematic flowchart of a communication method according to an embodiment of this application. As shown in FIG. 5, the method may include the following steps.

S501: A source network apparatus sends sixth information to a target network apparatus.

Correspondingly, the target network apparatus receives the sixth information from the source network apparatus.

The sixth information may be used to request a terminal apparatus to be handed over to a cell provided by the target network apparatus, or used to request a terminal apparatus to be handed over to a cell covered by the target network apparatus, or used to request a terminal apparatus to perform a cell handover, or used to request a terminal apparatus to perform a cell handover between network apparatuses. The sixth information may be a handover request message. A specific implementation form of the sixth information is not limited in this embodiment of this application.

The sixth information includes identification information of a data service task, for example, identification information of a data service task associated (or bound) with the terminal apparatus. The identification information of the data service task may be a predefined data service task identifier (data service task identifier), or may be a preconfigured data service task identifier, or may include a plurality of data service identifiers (data service identifier, DS ID). This is not limited. For example, the data service task includes data preprocessing, data transmission, and data analysis, and the identification information of the data service task includes a data preprocessing identifier, a data transmission identifier, and a data analysis identifier. The data service task associated with the terminal apparatus may be understood as that an implementation of the data service task requires participation of the terminal apparatus, and another terminal apparatus cannot replace the terminal apparatus.

For example, the source network apparatus may send the sixth information to the target network apparatus based on a measurement report reported by the terminal apparatus. Specifically, the terminal apparatus sends a measurement report to the source network apparatus. The source network apparatus receives the measurement report from the terminal apparatus; determines, based on the measurement report, that the terminal apparatus needs to perform the cell handover between network apparatuses; and sends the sixth information to the target network apparatus. It should be noted that an implementation process in which the source network apparatus determines, based on the measurement report, that the terminal apparatus needs to perform the cell handover between network apparatuses is not limited in this embodiment of this application.

In a possible implementation, the target network apparatus may send a response message of the sixth information to the source network apparatus; and correspondingly, the source network apparatus receives the response message of the sixth information from the target network apparatus, which are not shown in FIG. 5. The response message of the sixth information may indicate that the target network apparatus allows the terminal apparatus to be handed over to the cell provided by the target network apparatus, or indicate that the target network apparatus rejects the terminal apparatus to be handed over to the cell provided by the target network apparatus. For example, the target network apparatus may determine, in response to the sixth information, whether to allow the terminal apparatus to be handed over to the cell provided by the target network apparatus, and send the response message of the sixth information to the source network apparatus. A specific implementation process in which the target network apparatus determines whether to allow the terminal apparatus to be handed over to the cell provided by the target network apparatus is not limited in this embodiment of this application. The response message of the sixth information may be a handover response message, for example, a handover request acknowledge message. This is not limited. For ease of understanding, an example in which the target network apparatus allows the terminal apparatus to be handed over to the cell provided by the target network apparatus is used for description in this embodiment of this application.

For example, the target network apparatus may establish (or configure) a data plane bearer for the data service task. For example, the target network apparatus may establish the data plane bearer for the data service task after determining that the terminal apparatus is allowed to be handed over to the cell provided by the target network apparatus. For example, the target network apparatus establishes the data plane bearer for the data service task based on the data service task identifier. It should be understood that a specific implementation process in which the target network apparatus establishes the data plane bearer for the data service task is not limited in this embodiment of this application.

In a possible implementation, the source network apparatus may send tenth information to the terminal apparatus; and correspondingly, the terminal apparatus receives the tenth information from the source network apparatus. The tenth information may indicate (or trigger) the terminal apparatus to establish the data plane bearer for the data service task. In this way, the terminal apparatus can establish the data plane bearer for the data service task, so that the terminal apparatus still executes the data service task or still participates in the implementation of the data service task after the cell handover is completed. The tenth information may be an RRC message, for example, an RRC reconfiguration message. A specific form of the tenth information is not limited in this embodiment of this application. Optionally, the source network apparatus may send the tenth information to the terminal apparatus after receiving the response message of the sixth information.

Optionally, the terminal apparatus may send eleventh information to the target network apparatus; and correspondingly, the target network apparatus receives the eleventh information from the terminal apparatus. The eleventh information may indicate that the terminal apparatus completes establishment of the data plane bearer of the data service task. The eleventh information may be an RRC message, for example, an RRC reconfiguration complete message. A specific form of the eleventh information is not limited in this embodiment of this application.

It should be noted that, the source network apparatus may directly send the sixth information to the target network apparatus if the cell handover is a cell handover based on an Xn interface. Further, the target network apparatus may directly send the response message of the sixth information to the source network apparatus.

Alternatively, the source network apparatus may send the sixth information to the target network apparatus by using a mobility management apparatus if the cell handover is a cell handover based on an NG interface. Specifically, the source network apparatus sends the sixth information to the mobility management apparatus. The mobility management apparatus receives the sixth information from the source network apparatus, and sends the sixth information to the target network apparatus. The target network apparatus receives the sixth information from the mobility management apparatus. Further, the target network apparatus may send the response message of the sixth information to the source network apparatus by using the mobility management apparatus. Specifically, the target network apparatus sends the response message of the sixth information to the mobility management apparatus. The mobility management apparatus receives the response message of the sixth information from the target network apparatus, and sends the response message of the sixth information to the source network apparatus. The source network apparatus receives the response message of the sixth information from the mobility management apparatus.

S502: A data control apparatus receives first information.

The first information may be used to request (or trigger) the data control apparatus to determine routing information (for example, a routing table) of the data service task between a plurality of data processing apparatuses, or used to request (or trigger) the data control apparatus to update routing information of the data service task. The first information may be a routing update request message, or the like. A specific implementation form of the first information is not limited in this embodiment of this application. A first data processing apparatus in the plurality of data processing apparatuses is disposed (or deployed) in the target network apparatus. In other words, the target network apparatus needs to provide a data service. Optionally, the first information includes identification information of the data service task.

The first information may come from the target network apparatus, or may come from the source network apparatus, as shown in FIG. 5. In other words, S502 may be implemented by using S502a, or may be implemented by using S502b. In FIG. 5, an example in which S502 is implemented by using S502a is used, and S502b is represented by a dashed line.

In S502a, the target network apparatus sends the first information to the data control apparatus; and correspondingly, the data control apparatus receives the first information from the source network apparatus. For example, the target network apparatus may send the first information to the data control apparatus after determining that the terminal apparatus is allowed to be handed over to the cell provided by the target network apparatus. This is not limited.

In S502b, the source network apparatus sends the first information to the data control apparatus; and correspondingly, the data control apparatus receives the first information from the source network apparatus. For example, the source network apparatus may send the first information to the data control apparatus after receiving the response message of the sixth information from the target network apparatus. This is not limited. Optionally, the first information may further include identification information of the target network apparatus.

S503: The data control apparatus sends second information to the target network apparatus.

Correspondingly, the target network apparatus receives the second information from the data control apparatus.

The second information may be used to determine a next-hop data processing apparatus of the data service task after the first data processing apparatus. The second information may be a routing update response message, or the like. A specific implementation form of the second information is not limited in this embodiment of this application. The next-hop data processing apparatus may also be referred to as a next data processing apparatus, or the like, and may be understood as a next data processing apparatus along a transmission path of data of the data service task. FIG. 4a is used as an example. A next-hop data processing apparatus of the data processing apparatus 20 is the data processing apparatus 24, and a next-hop data processing apparatus of the data processing apparatus 24 is the data processing apparatus 25. FIG. 4b is used as an example. Next-hop data processing apparatuses of both the data processing apparatus 20 and the data processing apparatus 23 are the data processing apparatus 24, and a next-hop data processing apparatus of the data processing apparatus 24 is the data processing apparatus 25.

Alternatively, the second information may indicate whether the routing information corresponding to the data service task changes, and when the routing information corresponding to the data service task changes, the second information may be further used to determine the next-hop data processing apparatus of the data service task after the first data processing apparatus. A plurality of data processing apparatuses that execute the data service task before the cell handover and a plurality of data processing apparatuses that execute the data service task after the cell handover may be the same, or may be different, or may be partially the same. For example, the plurality of data processing apparatuses that execute the data service task are disposed (or deployed) in a plurality of terminal apparatuses (for example, a scenario such as V2X or D2D), which means that no network apparatus needs to execute the data service task, and no network apparatus participates in the implementation of the data service task. Therefore, the plurality of data processing apparatuses that execute the data service task before the cell handover and the plurality of data processing apparatuses that execute the data service task after the cell handover may be the same, and the routing information corresponding to the data service task does not change. In this case, the second information may indicate that the routing information corresponding to the data service task does not change. For ease of understanding of this embodiment of this application, the second information is used to determine the next-hop data processing apparatus of the data service task after the first data processing apparatus below.

For example, the data control apparatus may send the second information to the target network apparatus based on the first information. For example, in response to the first information, the data control apparatus determines the routing information of the data service task between the plurality of data processing apparatuses, and sends the second information to the target network apparatus based on the routing information. For example, the data control apparatus configures the plurality of data processing apparatuses for the data service task in response to the first information, generates network topologies of the plurality of data processing apparatuses, and determines the routing information of the data service task between the plurality of data processing apparatuses based on the network topologies.

For example, the second information may be information about the next-hop data processing apparatus of the data service task after the first data processing apparatus, for example, address information of the next-hop data processing apparatus. This is not limited. Alternatively, the second information may be the routing information, for example, the routing table of the data service task between the plurality of data processing apparatuses. This is not limited. Alternatively, the second information may be identification information of a first data pipeline, for example, a data pipeline identifier (data pipeline identifier, DP ID). The first data pipeline may be used to transmit the data of the data service task after the terminal apparatus successfully performs the cell handover, or used to transmit the data of the data service task after the terminal apparatus is handed over to the cell provided by the target network apparatus. The identification information of the first data pipeline may be information obtained by encoding the routing information of the data service task between the plurality of data processing apparatuses after the cell handover. This is not limited.

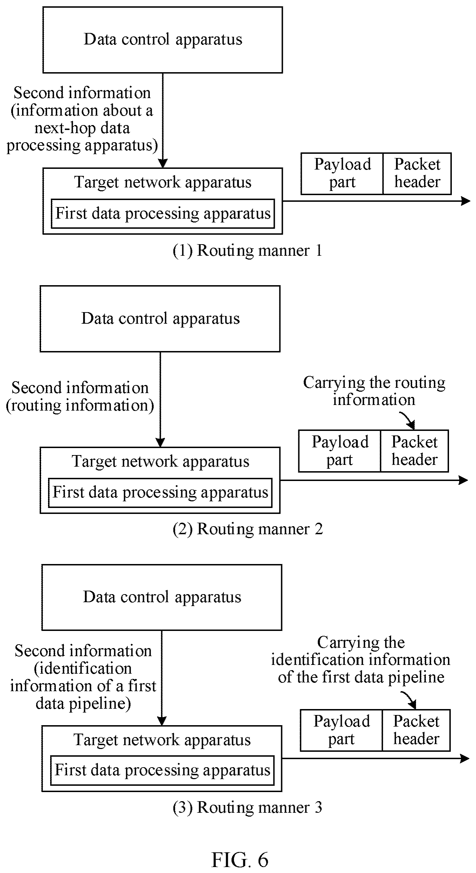

Content of the second information is related to a routing manner, and the content of the second information varies with the routing manner. For example, this embodiment of this application provides three routing manners, as shown in FIG. 6. The following describes the three routing manners.

Routing manner 1: The data control apparatus sends, to each of the plurality of data processing apparatuses other than an end node that executes the data service task, information about a next-hop data processing apparatus corresponding to the data processing apparatus. A data packet between data processing apparatuses does not need to carry information about the transmission path. For example, the data control apparatus generates the network topologies of the plurality of data processing apparatuses, performs route computing based on the network topologies, and sends, to each of the plurality of data processing apparatuses other than the end node, the information about the next-hop data processing apparatus corresponding to the data processing apparatus.

In Routing manner 1, the second information may be the information about the next-hop data processing apparatus of the data service task after the first data processing apparatus, as shown in (1) in FIG. 6. A packet header does not need to carry the information about the transmission path. A payload part is used to carry the data of the data service task.

In this embodiment of this application, the terminal apparatus performs the cell handover between network apparatuses. Quantities of data processing apparatuses that execute the data service task before and after the cell handover may be the same or may be different. This is not limited. The plurality of data processing apparatuses that execute the data service task before the cell handover and the plurality of data processing apparatuses that execute the data service task after the cell handover may be the same, or may be different, or may be partially the same. This is not limited. Therefore, in this embodiment of this application, the data control apparatus may send, to each of the plurality of data processing apparatuses other than the end node, the information about the next-hop data processing apparatus corresponding to the data processing apparatus; or may send, to each of some data processing apparatuses in the plurality of data processing apparatuses other than the end node, information about a next-hop data processing apparatus corresponding to the data processing apparatus. The some data processing apparatuses are data processing apparatuses whose next-hop data processing apparatuses change and/or newly added data processing apparatuses, including the first data processing apparatus. For example, the data control apparatus may determine a data processing apparatus whose next-hop data processing apparatuses before and after the cell handover are different and a newly added data processing apparatus, and send, to each of these data processing apparatuses, information about a next-hop data processing apparatus corresponding to the data processing apparatus.

For example, the data control apparatus may send fourth information to a third data processing apparatus. The fourth information is information about a next-hop data processing apparatus of the data service task after the third data processing apparatus. The third data processing apparatus is one of the plurality of data processing apparatuses other than the end node that executes the data service task, for example, one of the plurality of data processing apparatuses other than the first data processing apparatus and the end node that executes the data service task. The next-hop data processing apparatus of the data service task after the third data processing apparatus is one of the plurality of data processing apparatuses other than the first data processing apparatus and the third data processing apparatus. Optionally, the third data processing apparatus may be a data processing apparatus whose next-hop data processing apparatus changes and/or a newly added data processing apparatus. This is not limited.

For example, it is assumed that a transmission path of the data service corresponding to the data service task between the plurality of data processing apparatuses before the cell handover is: data processing apparatus 1 -> data processing apparatus 2 -> data processing apparatus 3 -> data processing apparatus 4, and a transmission path of the data service corresponding to the data service task between the plurality of data processing apparatuses after the cell handover is: data processing apparatus 5 -> data processing apparatus 2 -> data processing apparatus 3 -> data processing apparatus 6. Herein, "->" indicates a transmission direction of the service data. The data control apparatus may send information about the data processing apparatus 2 to the data processing apparatus 5, send information about the data processing apparatus 3 to the data processing apparatus 2, and send information about the data processing apparatus 6 to the data processing apparatus 3; or may send information about the data processing apparatus 2 to the data processing apparatus 5, and send information about the data processing apparatus 6 to the data processing apparatus 3, without sending information about the data processing apparatus 3 to the data processing apparatus 2, thereby reducing network resource consumption.

Routing manner 2: The data control apparatus sends the routing information to each of at least one start node that executes the data service task. A data packet between data processing apparatuses carries information about the transmission path. For example, a packet header carries the routing information. For example, the data control apparatus generates the network topologies of the plurality of data processing apparatuses, performs route computing based on the network topologies, and sends the routing information to each of the at least one start node that executes the data service task.

Optionally, in a process of transmitting the data service task, the data processing apparatus may determine the information about the next-hop data processing apparatus based on the routing information, delete related information of a current node (for example, routing information of the current node) in the routing information, use a packet header to carry routing information obtained through deletion, and send the packet header to the next-hop data processing apparatus, to reduce a data amount and improve forwarding efficiency.

In Routing manner 2, the second information may be the routing information, as shown in (2) in FIG. 6. The packet header carries the routing information, or carries the routing information obtained by deleting the related information of the first data processing apparatus. In FIG. 6, an example in which the packet header carries the routing information is used.

For example, it is assumed that the at least one start node that executes the data service task includes the first data processing apparatus and a second data processing apparatus. In other words, the second data processing apparatus is one of the at least one start node that executes the data service task. The data control apparatus may further send the routing information to the second data processing apparatus.

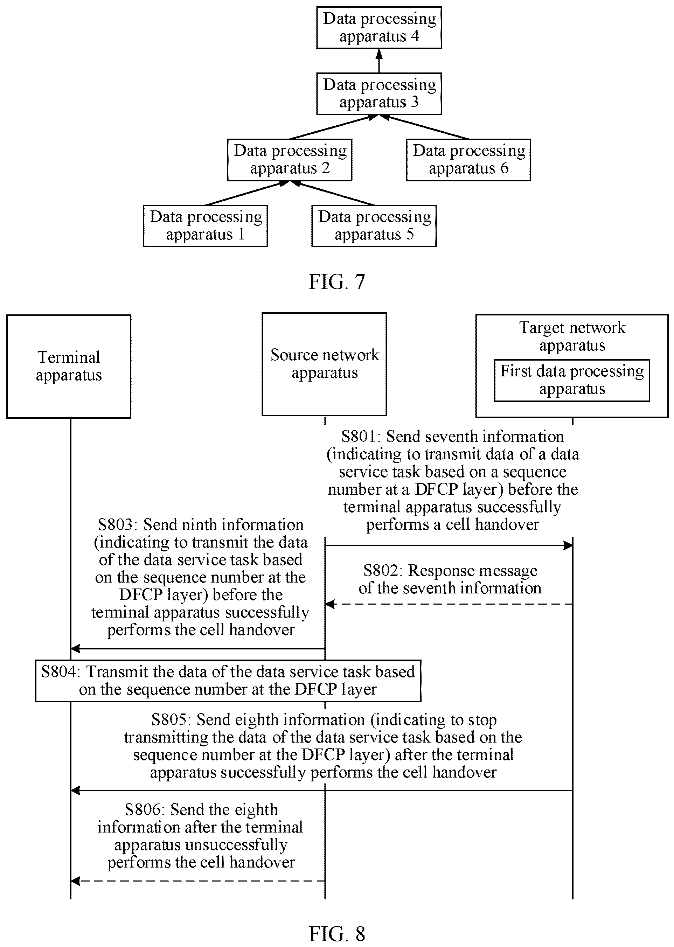

For example, it is assumed that a transmission path of the data service corresponding to the data service task between the plurality of data processing apparatuses after the cell handover is: data processing apparatus 1 -> data processing apparatus 2 -> data processing apparatus 3 -> data processing apparatus 4, data processing apparatus 5 -> data processing apparatus 2 -> data processing apparatus 3 -> data processing apparatus 4, and data processing apparatus 6 -> data processing apparatus 3 -> data processing apparatus 4, as shown in FIG. 7. The routing information is that next-hop data processing apparatuses of the data processing apparatus 1 and the data processing apparatus 5 are the data processing apparatus 2, next-hop data processing apparatuses of the data processing apparatus 2 and the data processing apparatus 6 are the data processing apparatus 3, and a next-hop data processing apparatus of the data processing apparatus 3 is a data processing apparatus 4, as shown in Table 1. The data processing apparatus 1, the data processing apparatus 5, and the data processing apparatus 6 are start nodes, and the data processing apparatus 4 is an end node. The data control apparatus may send the routing information to the data processing apparatus 1, send the routing information to the data processing apparatus 5, and send the routing information to the data processing apparatus 6. It should be understood that Table 1 is used as an example, and does not limit a specific implementation form and content of the routing information.

**Table 1**

| Current data processing apparatus | Next-hop data processing apparatus |
|---|---|
| Data processing apparatus 1 | Data processing apparatus 2 |
| Data processing apparatus 2 | Data processing apparatus 3 |
| Data processing apparatus 3 | Data processing apparatus 4 |
| Data processing apparatus 5 | Data processing apparatus 2 |
| Data processing apparatus 6 | Data processing apparatus 3 |

Routing manner 3: The data control apparatus sends the identification information of the first data pipeline to each of the at least one start node that executes the data service task. A data packet between data processing apparatuses carries information about the transmission path. For example, the packet header carries the identification information of the first data pipeline. For example, the data control apparatus generates the network topologies of the plurality of data processing apparatuses, performs route computing based on the network topologies to obtain the routing information, encodes the routing information to obtain the identification information of the first data pipeline, and sends the identification information of the first data pipeline to each of the at least one start node that executes the data service task. A specific implementation in which the data control apparatus encodes the routing information is not limited in this embodiment of this application.

In Routing manner 3, the second information may be the identification information of the first data pipeline, as shown in (3) in FIG. 6. The packet header carries the identification information of the first data pipeline.

For example, it is assumed that the at least one start node that executes the data service task includes the first data processing apparatus and a second data processing apparatus. In other words, the second data processing apparatus is one of the at least one start node that executes the data service task. The data control apparatus may further send the identification information of the first data pipeline to the second data processing apparatus.

FIG. 7 is used as an example. The data processing apparatus 1, the data processing apparatus 5, and the data processing apparatus 6 are start nodes, and the data processing apparatus 4 is an end node. The data control apparatus may send the identification information of the first data pipeline to the data processing apparatus 1, send the identification information of the first data pipeline to the data processing apparatus 5, and send the identification information of the first data pipeline to the data processing apparatus 6.

Optionally, the data control apparatus may further send third information to each of the at least one start node that executes the data service task. The third information may indicate a correspondence between the identification information of the first data pipeline and identification information of a second data pipeline. In this way, the start node may transmit the data of the data service task in a cell handover process. The second data pipeline may be used to transmit the data of the data service task before the terminal apparatus performs the cell handover, or used to transmit the data of the data service task after the terminal apparatus is handed over to the cell provided by the target network apparatus. The identification information of the second data pipeline may be information obtained by encoding the routing information of the data service task between the plurality of data processing apparatuses before the cell handover. This is not limited.

Optionally, the data control apparatus may further send the third information to the source network apparatus. In this way, the source network apparatus may send, to the target network apparatus based on the identification information of the first data pipeline and the identification information of the second data pipeline, data that is of the data service task and that is buffered by the source network apparatus in a process in which the terminal apparatus performs the cell handover, so that transmission of the data of the data service task in the cell handover process can be implemented.

In S503, the data control apparatus may actively send the second information to the target network apparatus. For example, after determining the routing information of the data service task between the plurality of data processing apparatuses, the data control apparatus may actively send the second information to the target network apparatus; or the data control apparatus may send the second information to the target network apparatus in response to fifth information from the target network apparatus or the mobility management apparatus. The fifth information may be used to trigger (or indicate) the data control apparatus to send the second information to the target network apparatus. The fifth information may be, for example, a cell handover success notification message, is used to notify the terminal apparatus that the cell handover succeeds (or notify the terminal apparatus that the cell handover is completed), and may further trigger the data control apparatus to send the second information to the target network apparatus.

For example, the target network apparatus may send the fifth information to the data control apparatus; and correspondingly, the data control apparatus receives the fifth information from the target network apparatus. For example, the target network apparatus may send the fifth information to the data control apparatus after the terminal apparatus successfully performs the cell handover.

For another example, the mobility management apparatus may send the fifth information to the data control apparatus; and correspondingly, the data control apparatus receives the fifth information from the mobility management apparatus. For example, the mobility management apparatus may send the fifth information to the data control apparatus after the terminal apparatus successfully performs the cell handover. For example, the mobility management apparatus may send the fifth information to the data control apparatus after receiving a handover notification (handover notify) message or a path switch request (path switch request) message from the target network apparatus. The handover notification message may be used to notify that the terminal apparatus is handed over to the cell provided by the target network apparatus. The path switch request may indicate that the terminal apparatus is handed over to the cell provided by the target network apparatus.

The fifth information may be used to trigger the data control apparatus to send the second information to the target network apparatus, which means that the data control apparatus needs to send the second information to the target network apparatus after receiving the fifth information. In another possible implementation, the fifth information may be used to trigger the data control apparatus to send route-related information (for example, the information about the next-hop data processing apparatus, the routing information, or the identification information of the first data pipeline) to all or some of the plurality of data processing apparatuses other than the first data processing apparatus and the end node, which means that the data control apparatus needs to send the route-related information to all or some of the plurality of data processing apparatuses other than the first data processing apparatus and the end node after receiving the fifth information. In this case, the data control apparatus may send the second information to the target network apparatus after receiving the fifth information, or may actively send the second information to the target network apparatus after determining the routing information of the data service task between the plurality of data processing apparatuses. This is not limited.

Alternatively, the fifth information may be used to trigger the data control apparatus to send the route-related information to all or some (including the first data processing apparatus) of the plurality of data processing apparatuses other than the end node, which means that the data control apparatus needs to send the route-related information to all or some of the plurality of data processing apparatuses other than the end node after receiving the fifth information.

For example, for Routing manner 1, after receiving the fifth information, the data control apparatus may send, to all or some of the plurality of data processing apparatuses other than the end node, information about a next-hop data processing apparatus corresponding to the all or some data processing apparatuses. For example, after receiving the fifth information, the data control apparatus sends the information about the next-hop data processing apparatus of the first data processing apparatus to the first data processing apparatus, and sends the information about the next-hop data processing apparatus of the third data processing apparatus to the third data processing apparatus. In this case, the fifth information may be used to trigger sending of the information about the next-hop data processing apparatus to the first data processing apparatus and the third data processing apparatus.

For Routing manner 2, the data control apparatus may send the routing information to the at least one start node after receiving the fifth information. For example, the data control apparatus sends the routing information to the first data processing apparatus and the second data processing apparatus after receiving the fifth information. In this case, the fifth information may be used to trigger the data control apparatus to send the routing information to the first data processing apparatus and the second data processing apparatus.

For Routing manner 3, the data control apparatus may send the identification information of the first data pipeline to the at least one start node after receiving the fifth information. For example, after receiving the fifth information, the data control apparatus sends the identification information of the first data pipeline to the first data processing apparatus and the second data processing apparatus. In this case, the fifth information may be used to trigger the data control apparatus to send the identification information of the first data pipeline to the first data processing apparatus and the second data processing apparatus.

Optionally, the target network apparatus may further send, to the source network apparatus, indication information that indicates to release a context of the terminal apparatus. The indication information is, for example, a UE context release message. This is not limited. Correspondingly, the source network apparatus receives, from the target network apparatus, the indication information that indicates to release the context of the terminal apparatus, and releases the context of the terminal apparatus in response to the indication information. So far, the terminal apparatus completes the cell handover.

S504: The target network apparatus determines the next-hop data processing apparatus of the data service task after the first data processing apparatus based on the second information.

If the second information is the information about the next-hop data processing apparatus of the data service task after the first data processing apparatus, the target network apparatus may obtain the next-hop data processing apparatus of the data service task after the first data processing apparatus by parsing the second information. Alternatively, if the second information is the routing information, the target network apparatus may determine the next-hop data processing apparatus of the data service task after the first data processing apparatus based on the routing information. Alternatively, if the second information is the identification information of the first data pipeline, the target network apparatus may decode the identification information of the first data pipeline to obtain the routing information, and determine the next-hop data processing apparatus of the data service task after the first data processing apparatus based on the routing information.

For example, the target network apparatus may receive, from the terminal apparatus, a request message used to request to execute the data service task; execute the data service task (for example, a data service that provides data collection) to obtain a second data packet; determine the next-hop data processing apparatus of the data service task after the first data processing apparatus based on the second information; and send the second data packet to the next-hop data processing apparatus. Optionally, the target network apparatus may send the second data packet and the identification information of the data service task to the next-hop data processing apparatus. In this example, no data processing apparatus is disposed in the terminal apparatus. The second data packet carries the data of the data service task.

For another example, the target network apparatus may receive the first data packet and the identification information of the data service task; execute, based on the identification information of the data service task, the data service task for data carried in the first data packet, to obtain a second data packet; determine the next-hop data processing apparatus of the data service task after the first data processing apparatus based on the second information; and send the second data packet to the next-hop data processing apparatus. Optionally, the target network apparatus may send the second data packet and the identification information of the data service task to the next-hop data processing apparatus. In this example, a data processing apparatus is disposed in the terminal apparatus. The first data packet carries the data of the data service task. The second data packet carries the data of the data service task. The data carried in the first data packet and the data carried in the second data packet may be the same (for example, the target network apparatus provides a data service of data forwarding), or may be different. This is not limited.

The first data packet may be from the terminal apparatus. For example, the terminal apparatus may send the first data packet and the identification information of the data service task to the target network apparatus after the terminal apparatus successfully performs the cell handover. For example, the terminal apparatus executes the data service task to obtain the first data packet.

Alternatively, the first data packet may be from the source network apparatus. For example, the source network apparatus may send the identification information of the data service task and the first data packet buffered by the source network apparatus to the target network apparatus. For example, in the process in which the terminal apparatus performs the cell handover or before the terminal apparatus successfully performs the cell handover, the terminal apparatus may send the first data packet and the identification information of the data service task to the source network apparatus. The source network apparatus receives the first data packet from the terminal apparatus and the identification information of the data service task, buffers the first data packet based on the identification information of the data service task, and sends the identification information of the data service task and the first data packet buffered by the source network apparatus to the target network apparatus after the terminal apparatus successfully performs the cell handover.

For example, if the data control apparatus configures Routing manner 3, that the source network apparatus sends the identification information of the data service task and the first data packet buffered by the source network apparatus to the target network apparatus after the terminal apparatus successfully performs the cell handover may be as follows: The source network apparatus may send the identification information of the data service task, the identification information of the second data pipeline, and the first data packet buffered by the source network apparatus to the target network apparatus based on the third information from the data control apparatus. For example, the source network apparatus may determine, based on the identification information of the second data pipeline and the correspondence between the identification information of the first data pipeline and the identification information of the second data pipeline, to send the first data packet to the target network apparatus corresponding to the first data pipeline. Correspondingly, the target network apparatus receives the first data packet, the identification information of the data service task, and the identification information of the second data pipeline from the source network apparatus, and sends the second data packet to the next-hop data processing apparatus based on the identification information of the second data pipeline and the third information. Specifically, the target network apparatus may execute, based on the identification information of the data service task, the data service task for the data carried in the first data packet, to obtain the second data packet; determine the identification information of the first data pipeline based on the third information and the identification information of the second data pipeline; and determine the next-hop data processing apparatus based on the identification information of the first data pipeline. For example, the data service task may correspond to a plurality of data pipelines, and the target network apparatus may determine, based on the identification information of the second data pipeline and the third information, to transmit the second data packet through the first data pipeline. Optionally, the target network apparatus may send the second data packet, the identification information of the data service task, and the identification information of the first data pipeline to the next-hop data processing apparatus.

It should be noted that a trigger condition for determining the next-hop data processing apparatus of the data service task after the first data processing apparatus by the target network apparatus based on the second information is not limited in this embodiment of this application.

In the foregoing embodiment of this application, the terminal apparatus performs the cell handover between network apparatuses, and the data control apparatus sends the second information to the target network apparatus in response to the first information. The second information is used to determine the next-hop data processing apparatus of the data service task after the first data processing apparatus. Therefore, after the terminal apparatus completes the cell handover, the target network apparatus may determine the next-hop data processing apparatus based on the second information, to implement transmission of a data service corresponding to the data service task. In this way, a problem that preconfigured routing information is not applicable because the terminal apparatus performs the cell handover between the network apparatuses can be resolved, and transmission continuity of the data service can be ensured.

It should be noted that, an example in which the network apparatus executes the data service task or the network apparatus participates in the implementation of the data service task is used in the embodiment shown in FIG. 5. In another possible implementation, the network apparatus does not need to execute the data service task (or the network apparatus does not participate in the implementation of the data service task). For example, the plurality of processing apparatuses that execute the data service task are disposed in the plurality of terminal apparatuses. In this case, the plurality of data processing apparatuses that execute the data service task before the cell handover and the plurality of data processing apparatuses that execute the data service task after the cell handover may be different or may be the same.

The data control apparatus may send the second information to the target network apparatus if the plurality of data processing apparatuses that execute the data service task before the cell handover and the plurality of data processing apparatuses that execute the data service task after the cell handover are the same. The second information indicates that the routing information corresponding to the data service task does not change.

Alternatively, the data control apparatus may send the route-related information to the corresponding data processing apparatus in the foregoing routing manners if the plurality of data processing apparatuses that execute the data service task before the cell handover and the plurality of data processing apparatuses that execute the data service task after the cell handover are different. For example, the data control apparatus sends the fourth information to the third data processing apparatus. For details, refer to the descriptions of Routing manner 1. Details are not described again. For another example, the data control apparatus sends the routing information to the second data processing apparatus. For details, refer to the descriptions of Routing manner 2. Details are not described again. For still another example, the data control apparatus sends the identification information of the first data pipeline and the third information to the second data processing apparatus. For details, refer to the descriptions of Routing manner 3. Details are not described again. Further, the data control apparatus may further send the second information to the target network apparatus. The second information indicates that the routing information corresponding to the data service task changes.

Optionally, based on the embodiment shown in FIG. 5, the foregoing manner may include: In a cell handover process, lossless transmission of the data of the data service task is performed between the source network apparatus and the terminal apparatus, as shown in FIG. 8.

FIG. 8 is a schematic flowchart of another communication method according to an embodiment of this application. As shown in FIG. 8, the method may further include the following steps.

S801: A source network apparatus sends seventh information to a target network apparatus before a terminal apparatus successfully performs a cell handover.

Correspondingly, the target network apparatus receives the seventh information from the source network apparatus before the terminal apparatus successfully performs the cell handover.

The seventh information may indicate (or request) to perform lossless transmission on data of a data service task; or indicate (or request) to transmit data of a data service task based on a sequence number at a data forwarding control protocol (data forwarding control protocol, DFCP) layer, to implement lossless and reliable transmission of the data service task in a cell handover process. It should be noted that reliable transmission of the data service task in the cell handover process may alternatively be implemented between the terminal apparatus and the source network apparatus in another manner. This is not limited. The following provides descriptions by using an example in which the data of the data service task is transmitted based on the sequence number at the DFCP layer.

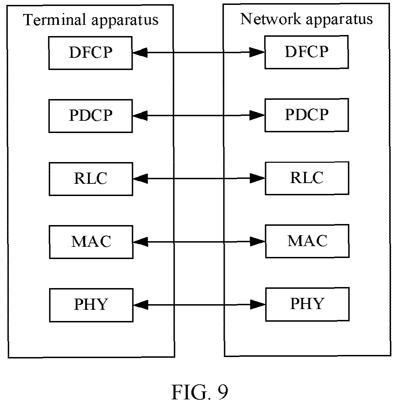

FIG. 9 is a diagram of a structure of a communication protocol stack. The communication protocol stack includes the DFCP layer, a packet data convergence protocol (packet data convergence protocol, PDCP) layer, a radio link control (radio link control, RLC) layer, a media access control (media access control, MAC) layer, and a physical (physical, PHY) layer. The DFCP layer is located above the PDCP layer, and the PDCP layer, the RLC layer, the MAC layer, and the PHY layer are sequentially deployed from top to bottom. The DFCP layer includes DFCP-C and DFCP-U. DFCP-C is used for data plane control signaling processing, which may include but is not limited to one or more of the following functions: starting and stopping the data service task, configuring routing information corresponding to the data service task, pushing and updating a data protection technology, reporting statistical information, and the like. The DFCP-U may be used for service data processing, and may include but is not limited to one or more of the following functions: mapping of identification information of the data service task onto a data plane bearer, implicit protection of data (for example, which is implemented by invoking an interface of a trusted plane), data packet compression, data routing and forwarding, data collection, data preprocessing, data analysis, data exposure, or the like. The PDCP layer, the RLC layer, the MAC layer, and the PHY layer are not limited in this embodiment of this application. Reliability of data transmission between the terminal apparatus and a network apparatus may be ensured by using the RLC layer, the MAC layer, and the PHY layer. In this embodiment of this application, reliability of data transmission between the terminal apparatus and the source network apparatus in the cell handover process is ensured by using the PDCP layer.

It should be noted that the seventh information and the sixth information shown in FIG. 5 may be sent simultaneously, or may not be sent simultaneously. An execution sequence of S501 and S801 is not limited in this embodiment of this application. Optionally, the seventh information may be carried in a handover request message.

S802: The target network apparatus sends a response message of the seventh information to the source network apparatus.

Correspondingly, the source network apparatus receives the response message of the seventh information from the target network apparatus.

S802 is an optional step, and is represented by a dashed line in FIG. 8. The response message of the seventh information may indicate that the target network apparatus successfully receives the seventh information. The seventh information may be a handover response message, for example, a handover request acknowledge message. This is not limited.

S803: The source network apparatus sends ninth information to the terminal apparatus before the terminal apparatus successfully performs the cell handover.

Correspondingly, the terminal apparatus receives the ninth information from the source network apparatus before the terminal apparatus successfully performs the cell handover.

The ninth information may indicate (or request) to perform lossless transmission on the data of the data service task; or indicate (or request) to transmit the data of the data service task based on the sequence number at the DFCP layer, to implement lossless and reliable transmission of the data service task in the cell handover process. The ninth information may be an RRC message, for example, an RRC reconfiguration message. This is not limited.

S804: Transmit the data of the data service task between the terminal apparatus and the source network apparatus based on the sequence number at the DFCP layer.

For example, the terminal apparatus sends a DFCP message to the source network apparatus. The DFCP message carries the data of the data service task and the sequence number. The source network apparatus sends a response message of the DFCP message to the terminal apparatus after receiving the DFCP message. The terminal apparatus retransmits the DFCP message to the source network apparatus if the terminal apparatus does not receive the response message of the DFCP message. A quantity of retransmission times is not limited in this embodiment of this application.

It should be noted that a specific implementation of transmitting the data of the data service task between the terminal apparatus and the source network apparatus based on the sequence number at the DFCP layer is not limited in this embodiment of this application.

S805: The target network apparatus sends eighth information to the terminal apparatus after the terminal apparatus successfully performs the cell handover.

Correspondingly, the terminal apparatus receives the eighth information from the target network apparatus after the terminal apparatus successfully performs the cell handover.

The eighth information may indicate to stop transmitting the data of the data service task based on the sequence number at the DFCP layer. A specific implementation form of the eighth information is not limited in this embodiment of this application. For example, the target network apparatus may send the eighth information to the terminal apparatus after receiving, from the terminal apparatus, information indicating that establishment of a data plane bearer is completed.

In FIG. 8, an example in which the terminal apparatus successfully performs the cell handover is used. In another possible implementation, the terminal apparatus unsuccessfully performs the cell handover, and the source network apparatus sends the eighth information to the terminal apparatus, that is, performs S806, which is represented by a dashed line in FIG. 8.

S806: The source network apparatus sends the eighth information to the terminal apparatus after the terminal apparatus unsuccessfully performs the cell handover.

Correspondingly, the terminal apparatus receives the eighth information from the source network apparatus after the terminal apparatus unsuccessfully performs the cell handover.

For example, the source network apparatus may send the eighth information to the terminal apparatus after receiving indication information (for example, an RRC reconfiguration failure message) that indicates that the cell handover fails and that is from the terminal apparatus, to indicate to stop transmitting the data of the data service task based on the sequence number at the DFCP layer.

In the embodiment shown in FIG. 8, reliable transmission performed based on the sequence number at the DFCP layer is enabled before the cell handover succeeds, and reliable transmission performed based on the sequence number at the DFCP layer is stopped after the cell handover succeeds or fails. In this way, reliable transmission of the data service task can be implemented in the cell handover process, and a problem that the data of the data service task is lost because the terminal apparatus performs the cell handover can be reduced.

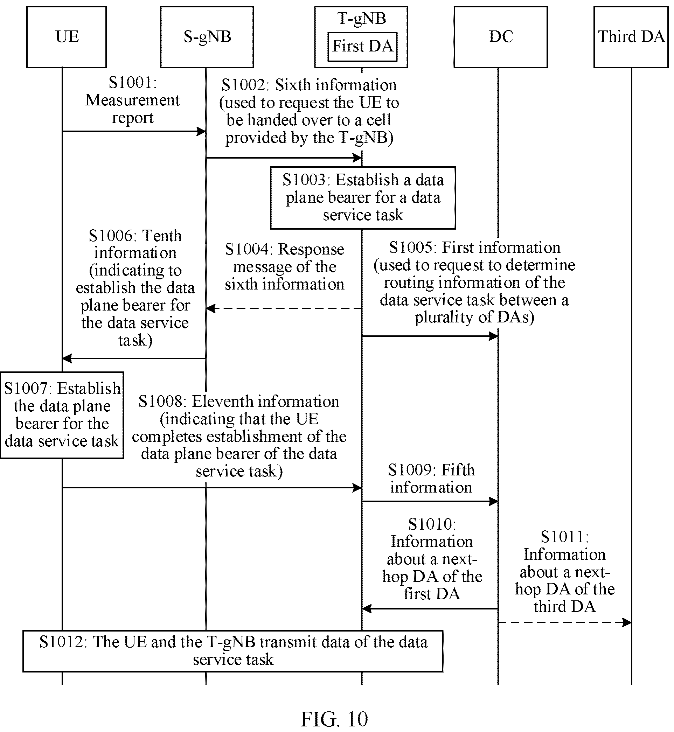

The following describes the embodiment shown in FIG. 5 for different scenarios by using an example in which a target network apparatus sends first information to a data control apparatus and fifth information is used to trigger the data control apparatus to send second information. For ease of description, in FIG. 10 to FIG. 15, an example in which a terminal apparatus is UE, a source network apparatus is a source (source) gNB (denoted as an S-gNB), a target network apparatus is a target (target) gNB (denoted as a T-gNB), a data control apparatus is a data controller (denoted as a DC) in a DO apparatus, a data processing apparatus is a DA apparatus (denoted as a DA), and a mobility management apparatus is an AMF is used. Correspondingly, a first data processing apparatus is denoted as a first DA, a second data processing apparatus is denoted as a second DA, and a third data processing apparatus is denoted as a third DA.

FIG. 10 is a schematic flowchart of another communication method according to an embodiment of this application. In this embodiment, a cell handover is a cell handover based on an Xn interface, second information is information about a next-hop DA of a first DA (that is, Routing manner 1 is used), and a T-gNB sends fifth information to a DC. As shown in FIG. 10, the method may include the following procedure.

S1001: UE sends a measurement report to an S-gNB. Correspondingly, the S-gNB receives the measurement report from the UE.

S1002: The S-gNB sends sixth information to the T-gNB. Correspondingly, the T-gNB receives the sixth information from the S-gNB. The sixth information may be used to request the UE to be handed over to a cell provided by the T-gNB. The sixth information includes identification information of a data service task. The sixth information may be, for example, a handover request message. This is not limited.

S1003: The T-gNB establishes a data plane bearer for the data service task. For example, the T-gNB determines to allow UE to be handed over to a cell provided by the T-gNB, and establishes the data plane bearer for the data service task.

S1004: The T-gNB sends a response message of the sixth information to the S-gNB. Correspondingly, the S-gNB receives the response message of the sixth information from the T-gNB.

S1004 is an optional step, and is represented by a dashed line in FIG. 10. The response message of the sixth information may indicate that the T-gNB allows the UE to be handed over to the cell provided by the T-gNB.

For a specific implementation process of S1001 to S1004, refer to content of S501 in the embodiment shown in FIG. 5. Details are not described again.

S1005: The T-gNB sends first information to the DC. Correspondingly, the DC receives the first information from the T-gNB. The first information may be used to trigger the T-gNB to determine routing information of the data service task between a plurality of DAs. The first information is, for example, a routing update request message. This is not limited.

For a specific implementation process of S1005, refer to content of S502 in the embodiment shown in FIG. 5. Details are not described again.

S1006: The S-gNB sends tenth information to the UE. Correspondingly, the UE receives the tenth information from the S-gNB. The tenth information may indicate the UE to establish the data plane bearer for the data service task.

S1007: The UE establishes the data plane bearer for the data service task. For example, the UE establishes the data plane bearer for the data service task in response to the tenth information. The tenth information may be an RRC message, for example, an RRC reconfiguration message. This is not limited.

S1008: The UE sends eleventh information to the T-gNB. Correspondingly, the T-gNB receives the eleventh information from the UE. The eleventh information may indicate that the UE completes establishment of the data plane bearer of the data service task. The eleventh information may be an RRC message, for example, an RRC reconfiguration complete message. This is not limited.

In this case, establishment of the user plane bearer corresponding to the data service task between the UE and the T-gNB is completed.

S1009: The T-gNB sends the fifth information to the DC. Correspondingly, the DC receives the fifth information from the T-gNB. The fifth information may be used to trigger the DC to send the second information to the T-gNB.

S1010: The DC sends the second information to the T-gNB. Correspondingly, the T-gNB receives the second information from the DC. The second information is the information about the next-hop DA of the data service task after the first DA. In FIG. 10, an example in which the DC sends the information about the next-hop DA of the first DA to the T-gNB is used.

S1011: The DC sends fourth information to a third DA. Correspondingly, the third DA receives the fourth information from the DC.

S1011 is an optional step, and is represented by a dashed line in FIG. 10. The fourth information is information about a next-hop DA the data service task after the third DA. In FIG. 10, an example in which the DC sends the information about the next-hop DA of the third DA to the third DA is used.

S1012: The UE and the T-gNB transmit data of the data service task.

In a data transmission process of the data service task, the T-gNB may determine the next-hop DA of the data service task after the first DA based on the second information, to implement data transmission of the data service task.

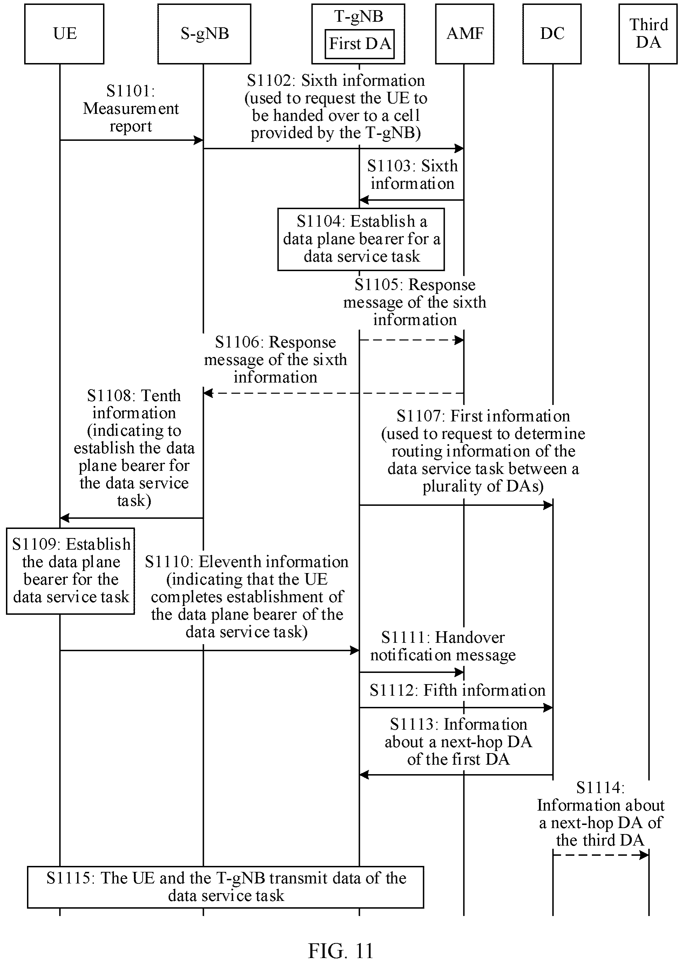

FIG. 11 is a schematic flowchart of another communication method according to an embodiment of this application. In this embodiment, a cell handover is a cell handover based on an NG interface, second information is information about a next-hop DA of a first DA (that is, Routing manner 1 is used), and a T-gNB sends fifth information to a DC. As shown in FIG. 11, the method may include the following procedure.

S1101, S1104, S1107 to S1110, and S1112 to S1115 in the embodiment shown in FIG. 11 are respectively the same as S1001, S1003, S1005 to S1008, and S1009 to S1012 in the embodiment shown in FIG. 10. A difference is as follows:

S1102: An S-gNB sends sixth information to an AMF. Correspondingly, the AMF receives the sixth information from the S-gNB. The sixth information is used to request UE to be handed over to a cell provided by the T-gNB. The sixth information may be, for example, a handover request message. This is not limited.

S1103: The AMF sends the sixth information to the T-gNB. Correspondingly, the T-gNB receives the sixth information from the AMF.

S1105: The T-gNB sends a response message of the sixth information to the AMF. Correspondingly, the AMF receives the response message of the sixth information from the T-gNB. The response message of the sixth information may indicate that the T-gNB allows the UE to be handed over to the cell provided by the T-gNB.

S1106: The AMF sends a response message of the sixth information to the T-gNB. Correspondingly, the T-gNB receives the response message of the sixth information from the AMF.

S1111: The T-gNB sends a handover notification message to the AMF. Correspondingly, the AMF receives the handover notification message from the T-gNB. The handover notification message may be replaced with a path switch request message, and may indicate that the UE is handed over to the cell provided by the T-gNB. In this way, the AMF may determine that the UE is handed over to the cell provided by the T-gNB.

S1105, S1106, and S1111 are optional steps, and are represented by dashed lines in FIG. 11.

In this embodiment, the cell handover performed by the UE is a cell handover based on an NG interface. In a cell handover process, the S-gNB interacts with the T-gNB by using the AMF.

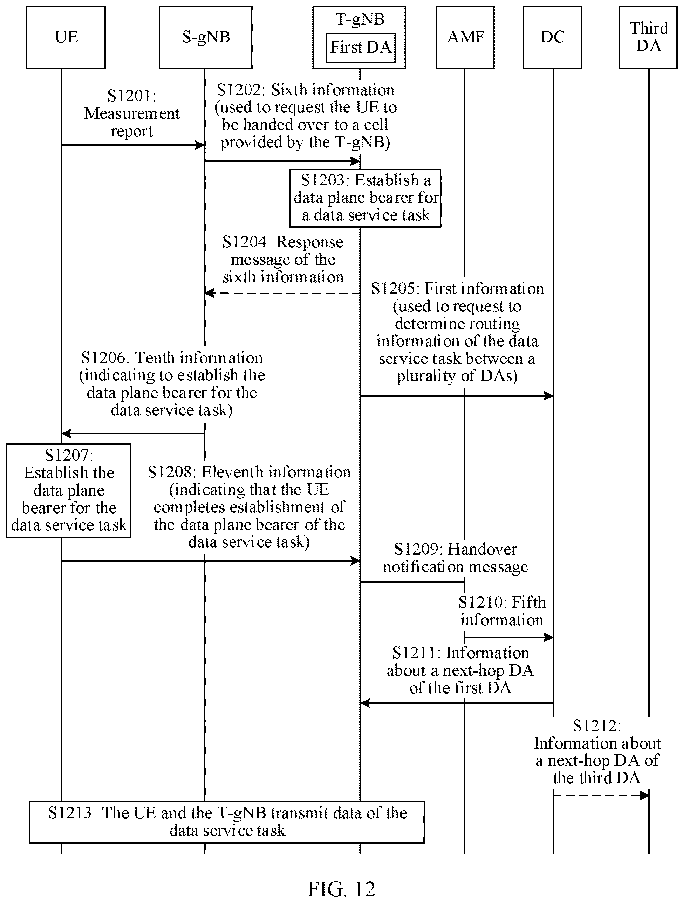

FIG. 12 is a schematic flowchart of another communication method according to an embodiment of this application. In this embodiment, a cell handover is a cell handover based on an Xn interface, second information is information about a next-hop DA of a first DA (that is, Routing manner 1 is used), and an AMF sends fifth information to a DC. As shown in FIG. 12, the method may include the following procedure.

S1201 to S1208 and S1211 to S1213 in the embodiment shown in FIG. 12 are respectively the same as S1001 to S1008 and S1010 to S1012 in the embodiment shown in FIG. 10. A difference is as follows:

S1209: A T-gNB sends a handover notification message to the AMF. Correspondingly, the AMF receives the handover notification message from the T-gNB. The handover notification message may be replaced with a path switch request message, and may indicate that UE is handed over to a cell provided by the T-gNB. In this way, the AMF may determine that the UE is handed over to the cell provided by the T-gNB.

S1210: The AMF sends fifth information to a DC. Correspondingly, the DC receives the fifth information from the AMF. The fifth information is used to trigger the DC to send the second information to the T-gNB. In this embodiment, after the cell handover succeeds, the AMF triggers the DC to send route-related information to the corresponding DA.

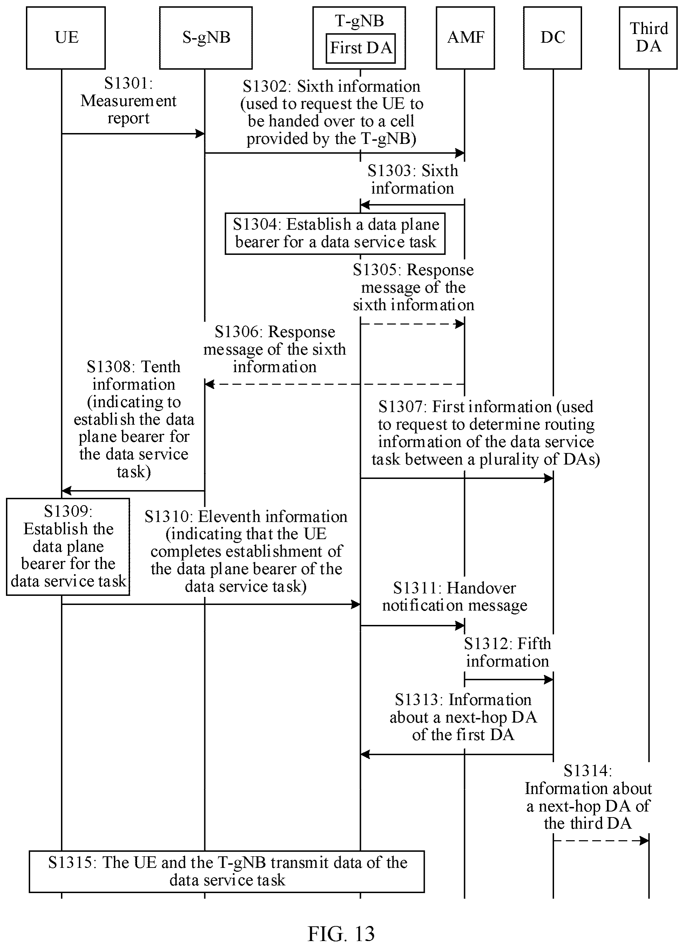

FIG. 13 is a schematic flowchart of another communication method according to an embodiment of this application. In this embodiment, a cell handover is a cell handover based on an NG interface, second information is information about a next-hop DA of a first DA (that is, Routing manner 1 is used), and an AMF sends fifth information to a DC. As shown in FIG. 13, the method may include the following procedure.

1301 to S1311 and S1313 to S1315 in the embodiment shown in FIG. 13 are respectively the same as S1101 to S1111 and S1113 to S1115 in the embodiment shown in FIG. 11. A difference is as follows:

S1312: The AMF sends fifth information to a DC. Correspondingly, the DC receives the fifth information from the AMF. The fifth information is used to trigger the DC to send the second information to the T-gNB.

In this embodiment, a cell handover performed by UE is a cell handover based on the NG interface. In a cell handover process, an S-gNB interacts with a T-gNB by using the AMF. After the cell handover succeeds, the AMF triggers the DC to send route-related information to a corresponding DA.

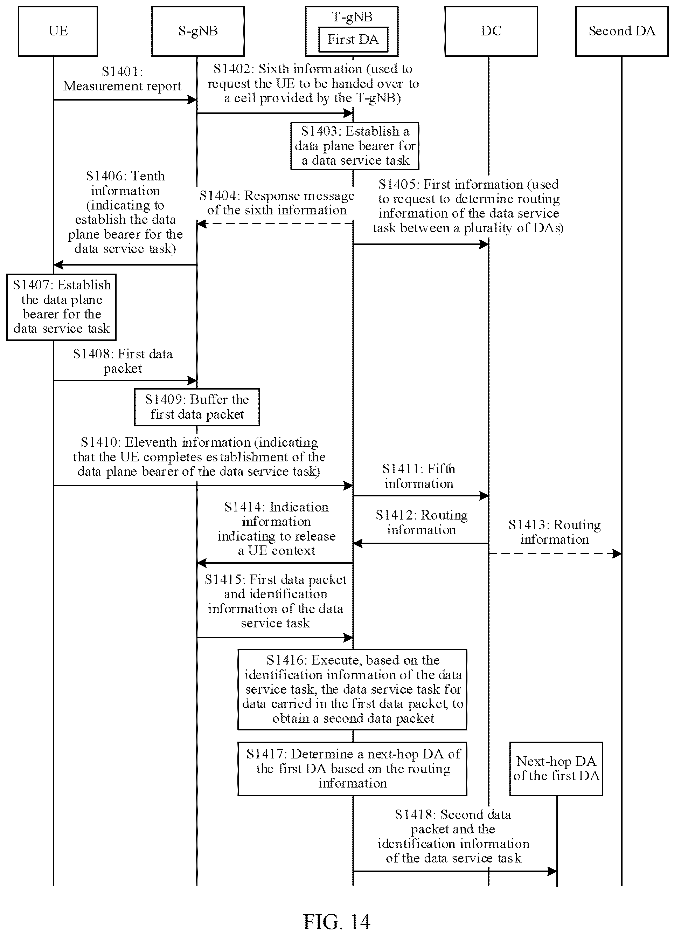

FIG. 14 is a schematic flowchart of another communication method according to an embodiment of this application. In this embodiment, a cell handover is a cell handover based on an Xn interface, second information is routing information (that is, Routing manner 2 is used), and a T-gNB sends fifth information to a DC. As shown in FIG. 14, the method may include the following procedure.

S1401 to S1407, S1410, and S1411 in the embodiment shown in FIG. 14 are respectively the same as S1001 to S1007, S1008, and S1009 in the embodiment shown in FIG. 10. A difference is as follows:

S1408: UE sends a first data packet to an S-gNB. Correspondingly, the S-gNB receives the first data packet from the UE. For example, the UE sends the first data packet and identification information of a data service task to the S-gNB.

S1409: The S-gNB buffers the first data packet. For example, the S-gNB may buffer the first data packet based on the identification information of the data service task.

S1412: A DC sends routing information to the T-gNB. Correspondingly, the T-gNB receives the routing information from the DC.

S1413: The DC sends the routing information to a second DA. Correspondingly, the second DA receives the routing information from the DC.

S1414: The T-gNB sends, to the S-gNB, indication information that indicates to release a UE context. Correspondingly, the S-gNB receives, from the T-gNB, the indication information that indicates to release the UE context. Further, the S-gNB releases the UE context in response to the indication information.

In this case, the UE is successfully handed over to a cell provided by the T-gNB.

S1415: The S-gNB sends the first data packet and the identification information of the data service task to the T-gNB. Correspondingly, the S-gNB receives the first data packet and the identification information of the data service task from the T-gNB. For example, after the UE successfully performs the cell handover, the S-gNB sends, to the T-gNB, the identification information of the data service task and the first data packet that are buffered in a cell handover process.

S1416: The T-gNB executes, based on the identification information of the data service task, the data service task for data carried in the first data packet, to obtain a second data packet.

S1417: The T-gNB determines a next-hop DA of a first DA based on the routing information.

S1418: The T-gNB sends the second data packet and the identification information of the data service task to the next-hop DA of the first DA. Correspondingly, the next-hop DA of the first DA receives the second data packet and the identification information of the data service task from the T-gNB.

It should be noted that, for an embodiment in a scenario in which a cell handover is a cell handover based on an NG interface, second information is routing information, and a T-gNB sends fifth information to a DC, refer to the embodiments shown in FIG. 11 and FIG. 14. For an embodiment in a scenario in which a cell handover is a cell handover based on an Xn interface, second information is routing information, and an AMF sends fifth information to a DC, refer to the embodiments shown in FIG. 12 and FIG. 14. For an embodiment in a scenario in which a cell handover is a cell handover based on an NG interface, second information is routing information, and an AMF sends fifth information to a DC, refer to the embodiments shown in FIG. 13 and FIG. 14. Details are not described.

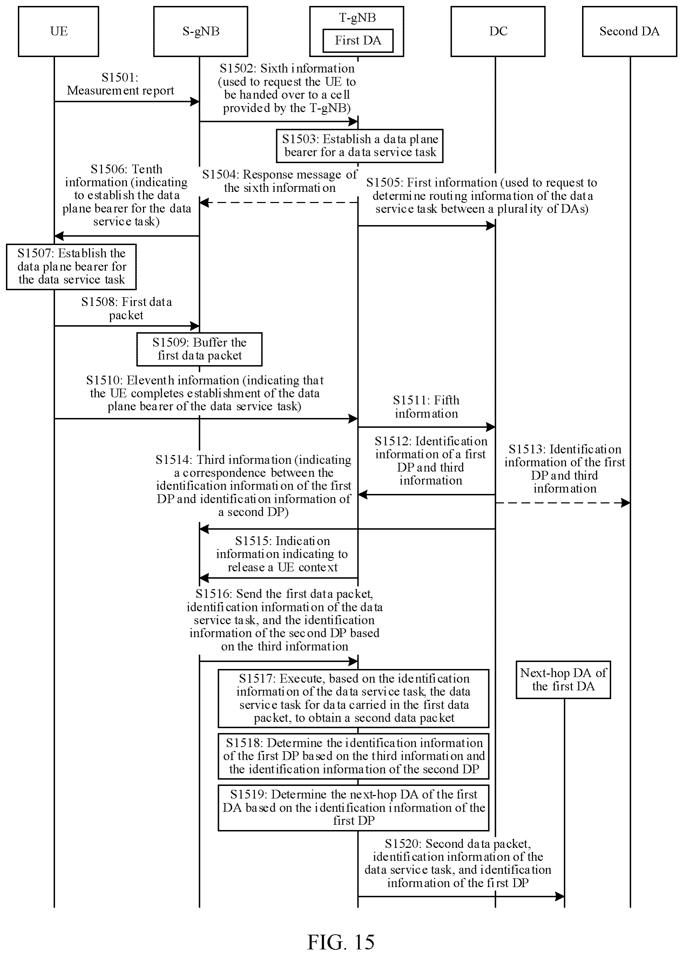

FIG. 15 is a schematic flowchart of another communication method according to an embodiment of this application. In this embodiment, a cell handover is a cell handover based on an Xn interface, second information is identification information of a first DP (that is, Routing manner 3 is used), and a T-gNB sends fifth information to a DC. As shown in FIG. 15, the method may include the following procedure.

S1501 to S1511, S1515, and S1517 in the embodiment shown in FIG. 15 are respectively the same as S1401 to S1411, S1414, and S1416 in the embodiment shown in FIG. 14. A difference is as follows:

S1512: The DC sends the identification information of the first DP and third information to the T-gNB. Correspondingly, the T-gNB receives the identification information of the first DP and the third information from the DC. The first DP is used to transmit data of a data service task after a cell handover succeeds. The third information may indicate a correspondence between the identification information of the first DP and identification information of a second DP. The second DP is used to transmit the data of the data service task before the cell handover succeeds.

S1513: The DC sends the identification information of the first DP and the third information to a second DA. Correspondingly, the second DA receives the identification information of the first DP and the third information from the DC.

S1514: The DC sends the third information to an S-gNB. Correspondingly, the S-gNB receives the third information from the DC.

S1516: The S-gNB sends a first data packet, identification information of the data service task, and the identification information of the second DP to the T-gNB based on the third information. Correspondingly, the T-gNB receives the first data packet, the identification information of the data service task, and the identification information of the second DP from the S-gNB.

S1518: The T-gNB determines the identification information of the first DP based on the third information and the identification information of the second DP.

S1519: The T-gNB determines a next-hop DA of a first DA based on the identification information of the first DP.

S1520: The T-gNB sends a second data packet, the identification information of the data service task, and the identification information of the first DP to the next-hop DA of the first DA. Correspondingly, the first-hop DA of the first DA receives the first data packet, the identification information of the data service task, and the identification information of the first DP that are from the T-gNB.

It should be noted that, for an embodiment in a scenario in which a cell handover is a cell handover based on an NG interface, second information is identification information of a first DP, and a T-gNB sends fifth information to a DC, refer to the embodiments shown in FIG. 11 and FIG. 15. For an embodiment in a scenario in which a cell handover is a cell handover based on an Xn interface, second information is identification information of a first DP, and an AMF sends fifth information to a DC, refer to the embodiments shown in FIG. 12 and FIG. 14. For an embodiment in a scenario in which a cell handover is a cell handover based on an NG interface, second information is identification information of a first DP, and an AMF sends fifth information to a DC, refer to the embodiments shown in FIG. 13 and FIG. 15. Details are not described.

It should be noted that, an execution sequence of the steps in any one of the embodiments shown in FIG. 10 to FIG. 15 is used as an example, and is not limited thereto. For example, S1005 may be performed after S1003, or may be performed before S1003, or S1003 and S1005 may be simultaneously performed. For another example, S1010 may be performed before S1011, or may be performed after S1011, or S1010 and S1011 may be simultaneously performed.

The foregoing mainly describes the solutions provided in embodiments of this application from a perspective of interaction between apparatuses. It may be understood that, to implement the foregoing functions, each apparatus such as a transmitter device or a receiver device includes a corresponding hardware structure and/or software module for performing each function. A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the transmitter device or the receiver device may be divided into functional modules based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, division into modules is an example, and is merely a logical functional division. In actual implementation, another division manner may be used. An example in which each functional module is obtained through division based on each corresponding function is used below for description.

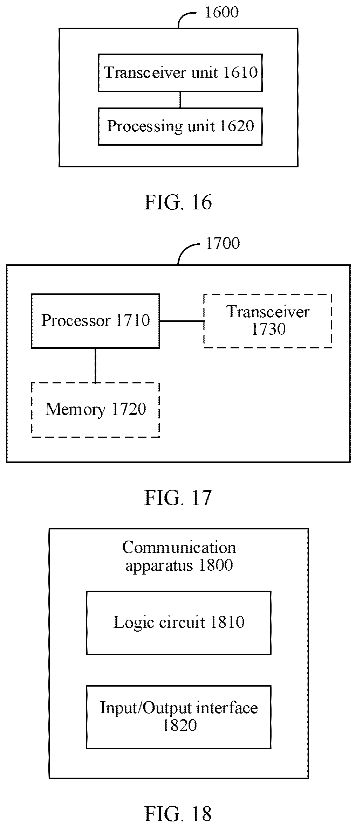

FIG. 16 is a block diagram of a communication apparatus according to an embodiment of this application. A communication apparatus 1600 shown in FIG. 16 includes a transceiver unit 1610 and a processing unit 1620. The transceiver unit 1610 may communicate with the outside, and the processing unit 1620 is configured to process data. The transceiver unit 1610 may also be referred to as a communication interface or a communication unit.

Optionally, the transceiver unit 1610 may include a sending unit and a receiving unit. The sending unit is configured to perform a sending operation in the foregoing method embodiments. The receiving unit is configured to perform a receiving operation in the foregoing method embodiments.

It should be noted that the communication apparatus 1600 may include the sending unit, but does not include the receiving unit. Alternatively, the communication apparatus 1600 may include the receiving unit, but does not include the sending unit. This may be specifically determined depending on whether the foregoing solutions performed by the communication apparatus 1600 include a sending action and a receiving action.

Optionally, the communication apparatus 1600 may further include a storage unit, the storage unit may be configured to store instructions and/or data, and the processing unit 1620 may read the instructions and/or the data in the storage unit.

In a design, the communication apparatus 1600 may be configured to perform actions performed by a data control apparatus in the foregoing method embodiments. For descriptions of the data control apparatus, refer to the foregoing content. Details are not described again. The transceiver unit 1610 is configured to perform a receiving or sending operation of the data control apparatus in the foregoing method embodiments, and the processing unit 1620 is configured to perform an internal processing operation of the data control apparatus in the foregoing method embodiments.

Optionally, the communication apparatus 1600 may be a device including the data control apparatus. Alternatively, the communication apparatus 1600 may be a component disposed in the data control apparatus, for example, a chip in the data control apparatus. In this case, the transceiver unit 1610 may be an interface circuit, a pin, or the like. Specifically, the interface circuit may include an input circuit and an output circuit, and the processing unit 1620 may include a processing circuit.

For example, the transceiver unit 1610 may be configured to: receive first information from a target network apparatus or a source network apparatus, where the first information is used to request to determine routing information of a data service task between a plurality of data processing apparatuses; and send second information to the target network apparatus, where the second information is used to determine a next-hop data processing apparatus of the data service task after a first data processing apparatus. The data service task is associated with a terminal apparatus, the target network apparatus is a target network apparatus of a cell handover performed by the terminal apparatus, the first data processing apparatus in the plurality of data processing apparatuses is disposed in the target network apparatus, the source network apparatus is a source network apparatus of the cell handover performed by the terminal apparatus, and the next-hop data processing apparatus is one of the plurality of data processing apparatuses other than the first data processing apparatus.

In a possible implementation, the second information is identification information of a first data pipeline, and the first data pipeline is used to transmit data of the data service task after the terminal apparatus successfully performs the cell handover. The transceiver unit 1610 is further configured to send third information to the source network apparatus and the target network apparatus. The third information indicates a correspondence between the identification information of the first data pipeline and identification information of a second data pipeline, and the second data pipeline is used to transmit the data of the data service task before the terminal apparatus performs the cell handover.

In a possible implementation, the plurality of data processing apparatuses may further include a second data processing apparatus, and the second data processing apparatus is one of at least one start node that executes the data service task. The transceiver unit 1610 is further configured to send the identification information of the first data pipeline and the third information to the second data processing apparatus. Optionally, the plurality of data processing apparatuses are deployed (or disposed) based on a tree network topology, and the start node is a data processing apparatus corresponding to a leaf node in the tree network topology.

In a possible implementation, the second information is the routing information, the plurality of data processing apparatuses further include a second data processing apparatus, and the second data processing apparatus is one of at least one start node that executes the data service task. The transceiver unit 1610 is further configured to send the routing information to the second data processing apparatus. Optionally, the plurality of data processing apparatuses are deployed (or disposed) based on a tree network topology, and the start node is a data processing apparatus corresponding to a leaf node in the tree network topology.

In a possible implementation, the second information is information about the next-hop data processing apparatus, the plurality of data processing apparatuses further include a third data processing apparatus, and the third data processing apparatus is one of the plurality of data processing apparatuses other than an end node that executes the data service task. The transceiver unit 1610 is further configured to send fourth information to the third data processing apparatus. The fourth information is information about a next-hop data processing apparatus of the data service task after the third data processing apparatus. Optionally, the plurality of data processing apparatuses are deployed (or disposed) based on a tree network topology, and the end node is a data processing apparatus corresponding to a root node in the tree network topology.

In a possible implementation, before sending the second information to the target network apparatus, the transceiver unit 1610 is further configured to receive fifth information from the target network apparatus or an access management apparatus. The fifth information is used to trigger the data control apparatus to send the second information.

In a possible implementation, the second information is information about the next-hop data processing apparatus; or
the second information is the routing information; or
the second information is the identification information of a first data pipeline, and the first data pipeline is used to transmit the data of the data service task after the terminal apparatus successfully performs the cell handover.

In another design, the communication apparatus 1600 may be configured to perform actions performed by a target network apparatus in the foregoing method embodiments. For descriptions of the target network apparatus, refer to the foregoing content. Details are not described again. The transceiver unit 1610 is configured to perform a receiving or sending operation of the target network apparatus in the foregoing method embodiments, and the processing unit 1620 is configured to perform an internal processing operation of the target network apparatus in the foregoing method embodiments.

Optionally, the communication apparatus 1600 may be a device including the target network apparatus. Alternatively, the communication apparatus 1600 may be a component configured in the target network apparatus, for example, a chip in the target network apparatus. In this case, the transceiver unit 1610 may be an interface circuit, a pin, or the like. Specifically, the interface circuit may include an input circuit and an output circuit, and the processing unit 1620 may include a processing circuit.

For example, the transceiver unit 1610 is configured to receive second information from a data control apparatus. The data control apparatus is configured to determine routing information of a data service task between a plurality of data processing apparatuses, the plurality of data processing apparatuses are configured to execute the data service task, a first data processing apparatus in the plurality of data processing apparatuses is disposed in the target network apparatus, and the data service task is associated with the terminal apparatus.

The processing unit 1620 is configured to determine a next-hop data processing apparatus of the data service task after the first data processing apparatus based on the second information. The next-hop data processing apparatus is one of the plurality of data processing apparatuses other than the first data processing apparatus.

In a possible implementation, before receiving the second information from the data control apparatus, the transceiver unit 1610 is further configured to receive sixth information from a source network apparatus, where the sixth information is used to request the terminal apparatus to be handed over to a cell provided by the target network apparatus, and the sixth information includes identification information of the data service task; and send first information to the data control apparatus based on the sixth information, where the first information is used to request the data control apparatus to determine the routing information of the data service task between the plurality of data processing apparatuses.

In a possible implementation, the transceiver unit 1610 is further configured to receive a first data packet from the source network apparatus and the identification information of the data service task; the processing unit 1620 is further configured to execute the data service task for data carried in the first data packet, to obtain a second data packet; and the transceiver unit 1610 is further configured to send the second data packet to the next-hop data processing apparatus.

In a possible implementation, the second information is identification information of a first data pipeline, and the first data pipeline is used to transmit data of the data service task after the terminal apparatus successfully performs the cell handover. The transceiver unit 1610 is further configured to: receive third information from the data control apparatus, where the third information indicates a correspondence between the identification information of the first data pipeline and identification information of a second data pipeline, and the second data pipeline is used to transmit the data of the data service task before the terminal apparatus performs the cell handover; receive the first data packet, the identification information of the data service task, and the identification information of the second data pipeline from the source network apparatus; and send the second data packet to the next-hop data processing apparatus based on the identification information of the second data pipeline and the third information.

In a possible implementation, the transceiver unit 1610 is further configured to: receive seventh information from the source network apparatus before the terminal apparatus successfully performs the cell handover, where the seventh information indicates to transmit the data of the data service task at a data forwarding control protocol layer based on a sequence number; and send eighth information to the terminal apparatus after the terminal apparatus successfully performs the cell handover, where the eighth information indicates to stop transmitting the data of the data service task at the data forwarding control protocol layer based on the sequence number.

In a possible implementation, the transceiver unit 1610 is further configured to send fifth information to the data control apparatus after the terminal apparatus successfully performs the cell handover. The fifth information is used to trigger the data control apparatus to send the second information.

In a possible implementation, the second information is information about the next-hop data processing apparatus; or
the second information is the routing information; or
the second information is the identification information of a first data pipeline, and the first data pipeline is used to transmit the data of the data service task after the terminal apparatus successfully performs the cell handover.

In another design, the communication apparatus 1600 may be configured to perform actions performed by a source network apparatus in the foregoing method embodiments. For descriptions of the source network apparatus, refer to the foregoing content. Details are not described again. The transceiver unit 1610 is configured to perform a receiving or sending operation of the source network apparatus in the foregoing method embodiments, and the processing unit 1620 is configured to perform an internal processing operation of the source network apparatus in the foregoing method embodiments.

Optionally, the communication apparatus 1600 may be a device including the source network apparatus. Alternatively, the communication apparatus 1600 may be a component configured in the source network apparatus, for example, a chip in the target network apparatus. In this case, the transceiver unit 1610 may be an interface circuit, a pin, or the like. Specifically, the interface circuit may include an input circuit and an output circuit, and the processing unit 1620 may include a processing circuit.

For example, the transceiver unit 1610 is configured to: send sixth information to a target network apparatus, where the sixth information is used to request a terminal apparatus to be handed over to a cell provided by the target network apparatus, and the sixth information includes identification information of a data service task; and send first information to a data control apparatus, where the first information is used to request the data control apparatus to determine routing information of the data service task between a plurality of data processing apparatuses, and a first data processing apparatus in the plurality of data processing apparatuses is disposed in the target network apparatus.

In a possible implementation, the transceiver unit 1610 is further configured to receive a first data packet from the terminal apparatus and the identification information of the data service task; the storage unit is configured to buffer the first data packet based on the identification information of the data service task; and the transceiver unit 1610 is further configured to send the first data packet and the identification information of the data service task to the target network apparatus after the terminal apparatus successfully performs the cell handover.

In a possible implementation, the transceiver unit 1610 is further configured to: receive third information from the data control apparatus, where the third information indicates a correspondence between identification information of a first data pipeline and identification information of a second data pipeline, the first data pipeline is used to transmit data of the data service task after the terminal apparatus successfully performs the cell handover, and the second data pipeline is used to transmit the data of the data service task before the terminal apparatus performs the cell handover; and send the first data packet, the identification information of the data service task, and the identification information of the second data pipeline to the target network apparatus based on the third information.

In a possible implementation, before the terminal apparatus successfully performs the cell handover, the transceiver unit 1610 is further configured to: send seventh information to the target network apparatus, where the seventh information indicates to transmit the data of the data service task at a data forwarding control protocol layer based on a sequence number; and send ninth information to the terminal apparatus, where the ninth information indicates to transmit the data of the data service task at the data forwarding control protocol layer based on the sequence number; and the processing unit 1620 is further configured to transmit the data of the data service task with the terminal apparatus at the data forwarding control protocol layer based on the sequence number.

In a possible implementation, after the terminal apparatus successfully performs the cell handover, the transceiver unit 1610 is further configured to receive eighth information from the target network apparatus. The eighth information indicates to stop transmitting the data of the data service task at the data forwarding control protocol layer based on the sequence number.

In a possible implementation, the transceiver unit 1610 is further configured to send tenth information to the terminal apparatus. The tenth information indicates the terminal apparatus to establish a data plane bearer for the data service task.

For a specific implementation, refer to content in the method embodiment shown in any one of FIG. 5, FIG. 8, and FIG. 10 to FIG. 15. Details are not described again.

As shown in FIG. 17, an embodiment of this application further provides a communication apparatus 1700. The communication apparatus 1700 includes a processor 1710. The processor 1710 is coupled to a memory 1720. The memory 1720 is configured to store a computer program or instructions and/or data. The processor 1710 is configured to execute the computer program or the instructions and/or the data stored in the memory 1720, so that the methods in the foregoing method embodiments are performed.

Optionally, the communication apparatus 1700 includes one or more processors 1710.

Optionally, as shown in FIG. 17, the communication apparatus 1700 may further include the memory 1720.

Optionally, the communication apparatus 1700 may include one or more memories 1720.

Optionally, the memory 1720 may be integrated with the processor 1710, or the memory 1720 and the processor 1710 are separately disposed.

Optionally, as shown in FIG. 17, the communication apparatus 1700 may further include a transceiver 1730 and/or a communication interface. The transceiver 1730 and/or the communication interface are/is configured to receive and/or send a signal. For example, the processor 1710 is configured to control the transceiver 1730 and/or the communication interface to receive and/or send the signal.

Optionally, a component for implementing a receiving function in the transceiver 1730 may be considered as a receiving module, and a component for implementing a sending function in the transceiver 1730 may be considered as a sending module. In other words, the transceiver 1730 includes a receiver machine and a transmitter machine. The transceiver sometimes may also be referred to as a transceiver machine, a transceiver module, a transceiver circuit, or the like. The receiver sometimes may also be referred to as a receiver machine, a receiving module, a receiver circuit, or the like. The transmitter sometimes may also be referred to as a transmitter machine, a transmitter, a transmitting module, a transmitting circuit, or the like.

In a solution, the communication apparatus 1700 is configured to implement an operation performed by a data control apparatus in the foregoing method embodiments. For example, the processor 1710 is configured to implement an operation (for example, determining network topologies of a plurality of data processing apparatuses and performing route computing) performed inside the data control apparatus in the foregoing method embodiments, and the transceiver 1730 is configured to implement a receiving or sending operation (for example, operations such as S502 and S503) performed by the data control apparatus in the foregoing method embodiments.

In another solution, the communication apparatus 1700 is configured to implement an operation performed by a target network apparatus in the foregoing method embodiments. For example, the processor 1710 is configured to implement an operation (for example, an operation such as S504) performed inside the target network apparatus in the foregoing method embodiments, and the transceiver 1730 is configured to implement a receiving or sending operation (for example, operations such as S501 and S503) performed by the target network apparatus in the foregoing method embodiments.

In another solution, the communication apparatus 1700 is configured to implement an operation performed by a source network apparatus in the foregoing method embodiments. For example, the processor 1710 is configured to implement an operation (for example, an operation such as S804) performed inside the source network apparatus in the foregoing method embodiments, and the transceiver 1730 is configured to implement a receiving or sending operation (for example, operations such as S501, S801, S802, and S803) performed by the source network apparatus in the foregoing method embodiments.

For a specific implementation, refer to content in the method embodiment shown in any one of FIG. 5, FIG. 8, and FIG. 10 to FIG. 15. Details are not described again.

As shown in FIG. 18, an embodiment of this application further provides a communication apparatus 1800. The communication apparatus 1800 includes a logic circuit 1810 and an input/output interface (input/output interface) 1820.

The logic circuit 1810 may be a processing circuit in the communication apparatus 1800. The logic circuit 1810 may be coupled and connected to a storage unit, and invoke instructions in the storage unit, so that the communication apparatus 1800 may implement the methods and functions in embodiments of this application. The input/output interface 1820 may be an input/output circuit in the communication apparatus 1800, and outputs information processed by the communication apparatus 1800, or inputs to-be-processed data or signaling information into the communication apparatus 1800 for processing.

In a solution, the communication apparatus 1800 is configured to implement an operation performed by a data control apparatus in the foregoing method embodiments. For example, the logic circuit 1810 is configured to implement processing-related operations performed by the data control apparatus in the foregoing method embodiments. The input/output interface 1820 is configured to implement sending and/or receiving-related operations performed by the data control apparatus in the foregoing method embodiments. For a specific operation performed by the logic circuit 1810, refer to the foregoing descriptions of the processing unit 1620. For an operation performed by the input/output interface 1820, refer to the foregoing descriptions of the transceiver unit 1610. Details are not described herein.

In another solution, the communication apparatus 1800 is configured to implement an operation performed by a target network apparatus in the foregoing method embodiments. For example, the logic circuit 1810 is configured to implement processing-related operations performed by the target network apparatus in the foregoing method embodiments. The input/output interface 1820 is configured to implement sending and/or receiving-related operations performed by the target network apparatus in the foregoing method embodiments. For a specific operation performed by the logic circuit 1810, refer to the foregoing descriptions of the processing unit 1620. For an operation performed by the input/output interface 1820, refer to the foregoing descriptions of the transceiver unit 1610. Details are not described herein.

In another solution, the communication apparatus 1800 is configured to implement an operation performed by a source network apparatus in the foregoing method embodiments. For example, the logic circuit 1810 is configured to implement processing-related operations performed by the source network apparatus in the foregoing method embodiments. The input/output interface 1820 is configured to implement sending and/or receiving-related operations performed by the source network apparatus in the foregoing method embodiments. For a specific operation performed by the logic circuit 1810, refer to the foregoing descriptions of the processing unit 1820. For a specific operation performed by the logic circuit 1810, refer to the foregoing descriptions of the processing unit 1620. For an operation performed by the input/output interface 1820, refer to the foregoing descriptions of the transceiver unit 1610. Details are not described herein.

For a specific implementation, refer to content in the method embodiment shown in any one of FIG. 5, FIG. 8, and FIG. 10 to FIG. 15. Details are not described again.

It should be understood that, the communication apparatus may be one or more chips. For example, the communication apparatus may be a field programmable gate array (field programmable gate array, FPGA), an application-specific integrated chip (application-specific integrated circuit, ASIC), a system on chip (system on chip, SoC), a central processing unit (central processor unit, CPU), a network processor (network processor, NP), a digital signal processing circuit (digital signal processor, DSP), a micro controller unit (micro controller unit, MCU), a programmable logic device (programmable logic device, PLD), or another integrated chip.

In an implementation process, steps in the foregoing methods can be implemented by using a hardware integrated logic circuit in the processor, or by using instructions in a form of software. The steps of the method disclosed with reference to embodiments of this application may be directly performed and completed by a hardware processor, or may be performed and completed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general purpose processor, a digital signal processor (DSP), an application specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

According to the method provided in embodiments of this application, this application further provides a computer-readable medium. The computer-readable medium stores program code. When the program code is run on a computer, the computer is enabled to perform the method shown in the method embodiments. For example, when the computer program is executed by a computer, the computer is enabled to implement the method performed by the data control apparatus, the method performed by the target network apparatus, or the method performed by the source network apparatus in the foregoing method embodiments.

An embodiment of this application further provides a computer program product including instructions. When the instructions are executed by a computer, the computer is enabled to implement the method performed by the data control apparatus, the method performed by the target network apparatus, or the method performed by the source network apparatus in the foregoing method embodiments.

An embodiment of this application further provides a communication system, including a data control apparatus and a plurality of data processing apparatuses. Optionally, the communication system further includes a source network apparatus.

For explanations and beneficial effects of related content in any one of the communication apparatuses provided above, refer to the corresponding method embodiments provided above. Details are not described herein again.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, applied to a data control apparatus, wherein the method comprises:
receiving first information from a target network apparatus or a source network apparatus, wherein the first information is used to request to determine routing information of a data service task between a plurality of data processing apparatuses, the data service task is associated with a terminal apparatus, the target network apparatus is a target network apparatus of a cell handover performed by the terminal apparatus, a first data processing apparatus in the plurality of data processing apparatuses is disposed in the target network apparatus, the source network apparatus is a source network apparatus of the cell handover performed by the terminal apparatus, and the plurality of data processing apparatuses are configured to execute the data service task; and
sending second information to the target network apparatus, wherein the second information is used to determine a next-hop data processing apparatus of the data service task after the first data processing apparatus, and the next-hop data processing apparatus is one of the plurality of data processing apparatuses other than the first data processing apparatus.

2. The method according to claim 1, wherein the second information is identification information of a first data pipeline, the first data pipeline is used to transmit data of the data service task after the terminal apparatus successfully performs the cell handover, and the method further comprises:
sending third information to the source network apparatus and the target network apparatus, wherein the third information indicates a correspondence between the identification information of the first data pipeline and identification information of a second data pipeline, and the second data pipeline is used to transmit the data of the data service task before the terminal apparatus performs the cell handover.

3. The method according to claim 2, wherein the plurality of data processing apparatuses further comprise a second data processing apparatus, the second data processing apparatus is one of at least one start node that executes the data service task, and the method further comprises: sending the identification information of the first data pipeline and the third information to the second data processing apparatus.

4. The method according to claim 1, wherein the second information is the routing information, the plurality of data processing apparatuses further comprise a second data processing apparatus, the second data processing apparatus is one of at least one start node that executes the data service task, and the method further comprises:
sending the routing information to the second data processing apparatus.

5. The method according to claim 1, wherein the second information is information about the next-hop data processing apparatus, the plurality of data processing apparatuses further comprise a third data processing apparatus, the third data processing apparatus is one of the plurality of data processing apparatuses other than an end node that executes the data service task, and the method further comprises:
sending fourth information to the third data processing apparatus, wherein the fourth information is information about a next-hop data processing apparatus of the data service task after the third data processing apparatus.

6. The method according to any one of claims 1 to 5, wherein before sending the second information to the target network apparatus, the method further comprises:
receiving fifth information from the target network apparatus or an access management apparatus, wherein the fifth information is used to trigger the data control apparatus to send the second information.

7. The method according to any one of claims 1 to 6, wherein
the second information is the information about the next-hop data processing apparatus; or
the second information is the routing information; or
the second information is the identification information of the first data pipeline, and the first data pipeline is used to transmit the data of the data service task after the terminal apparatus successfully performs the cell handover.

8. A communication method, applied to a target network apparatus of a cell handover performed by a terminal apparatus, wherein the method comprises:
receiving second information from a data control apparatus, wherein the data control apparatus is configured to determine routing information of a data service task between a plurality of data processing apparatuses, the plurality of data processing apparatuses are configured to execute the data service task, a first data processing apparatus in the plurality of data processing apparatuses is disposed in the target network apparatus, and the data service task is associated with the terminal apparatus; and
determining a next-hop data processing apparatus of the data service task after the first data processing apparatus based on the second information, wherein the next-hop data processing apparatus is one of the plurality of data processing apparatuses other than the first data processing apparatus.

9. The method according to claim 8, wherein before receiving the second information from the data control apparatus, the method further comprises:
receiving sixth information from a source network apparatus, wherein the sixth information is used to request the terminal apparatus to be handed over to a cell provided by the target network apparatus, and the sixth information comprises identification information of the data service task; and
sending first information to the data control apparatus based on the sixth information, wherein the first information is used to request the data control apparatus to determine the routing information of the data service task between the plurality of data processing apparatuses.

10. The method according to claim 8 or 9, wherein the method further comprises:
receiving a first data packet from the source network apparatus and the identification information of the data service task;
executing the data service task for data carried in the first data packet, to obtain a second data packet; and
sending the second data packet to the next-hop data processing apparatus.

11. The method according to claim 10, wherein the second information is identification information of a first data pipeline, the first data pipeline is used to transmit data of the data service task after the terminal apparatus successfully performs the cell handover, and the method further comprises:
receiving third information from the data control apparatus, wherein the third information indicates a correspondence between the identification information of the first data pipeline and identification information of a second data pipeline, and the second data pipeline is used to transmit the data of the data service task before the terminal apparatus performs the cell handover;
receiving the first data packet from the source network apparatus comprises:
receiving the first data packet, the identification information of the data service task, and the identification information of the second data pipeline from the source network apparatus; and
sending the second data packet to the next-hop data processing apparatus comprises:
sending the second data packet to the next-hop data processing apparatus based on the identification information of the second data pipeline and the third information.

12. The method according to any one of claims 8 to 11, wherein the method further comprises:
receiving seventh information from the source network apparatus before the terminal apparatus successfully performs the cell handover, wherein the seventh information indicates to transmit the data of the data service task at a data forwarding control protocol layer based on a sequence number; and
sending eighth information to the terminal apparatus after the terminal apparatus successfully performs the cell handover, wherein the eighth information indicates to stop transmitting the data of the data service task at the data forwarding control protocol layer based on the sequence number.

13. The method according to any one of claims 8 to 12, wherein the method further comprises:
sending fifth information to the data control apparatus after the terminal apparatus successfully performs the cell handover, wherein the fifth information is used to trigger the data control apparatus to send the second information.

14. The method according to any one of claims 8 to 13, wherein
the second information is information about the next-hop data processing apparatus; or
the second information is the routing information; or
the second information is the identification information of the first data pipeline, and the first data pipeline is used to transmit the data of the data service task after the terminal apparatus successfully performs the cell handover.

15. A communication method, applied to a source network apparatus of a cell handover performed by a terminal apparatus, wherein the method comprises:
sending sixth information to a target network apparatus, wherein the sixth information is used to request the terminal apparatus to be handed over to a cell provided by the target network apparatus, and the sixth information comprises identification information of a data service task associated with the terminal apparatus; and
sending first information to a data control apparatus, wherein the first information is used to request the data control apparatus to determine routing information of the data service task between the plurality of data processing apparatuses, the plurality of data processing apparatuses are configured to execute the data service task, and a first data processing apparatus in the plurality of data processing apparatuses is disposed in the target network apparatus.

16. The method according to claim 15, wherein the method further comprises:
receiving a first data packet from the terminal apparatus and the identification information of the data service task;
buffering the first data packet based on the identification information of the data service task; and
sending the first data packet and the identification information of the data service task to the target network apparatus after the terminal apparatus successfully performs the cell handover.

17. The method according to claim 16, wherein the method further comprises:
receiving third information from the data control apparatus, wherein the third information indicates a correspondence between identification information of a first data pipeline and identification information of a second data pipeline, the first data pipeline is used to transmit data of the data service task after the terminal apparatus successfully performs the cell handover, and the second data pipeline is used to transmit the data of the data service task before the terminal apparatus performs the cell handover; and
sending the first data packet and the identification information of the data service task to the target network apparatus after the terminal apparatus successfully performs the cell handover comprises:
sending the first data packet, the identification information of the data service task, and the identification information of the second data pipeline to the target network apparatus based on the third information.

18. The method according to any one of claims 15 to 17, wherein before the terminal apparatus successfully performs the cell handover, the method further comprises:
sending seventh information to the target network apparatus, wherein the seventh information indicates to transmit the data of the data service task at a data forwarding control protocol layer based on a sequence number;
sending ninth information to the terminal apparatus, wherein the ninth information indicates to transmit the data of the data service task at the data forwarding control protocol layer based on the sequence number; and
transmitting the data of the data service task with the terminal apparatus at the data forwarding control protocol layer based on the sequence number.

19. The method according to claim 18, wherein after the terminal apparatus successfully performs the cell handover, the method further comprises:
receiving eighth information from the target network apparatus, wherein the eighth information indicates to stop transmitting the data of the data service task at the data forwarding control protocol layer based on the sequence number.

20. The method according to any one of claims 15 to 19, wherein the method further comprises:
sending tenth information to the terminal apparatus, wherein the tenth information indicates the terminal apparatus to establish a data plane bearer for the data service task.

21. A communication apparatus, wherein the apparatus comprises units configured to perform the steps of the method according to any one of claims 1 to 7, or the apparatus comprises units configured to perform the steps of the method according to any one of claims 8 to 14, or the apparatus comprises units configured to perform the steps of the method according to any one of claims 15 to 20.

22. A communication apparatus, wherein the apparatus comprises a processor, the processor is coupled to a memory, the memory stores instructions, and when the instructions are run by the processor, the processor is enabled to perform the method according to any one of claims 1 to 7, or perform the method according to any one of claims 8 to 14, or perform the method according to any one of claims 15 to 20.

23. A communication apparatus, wherein the apparatus comprises a logic circuit, and the logic circuit is configured to: be coupled to an input/output interface, and transmit data through the input/output interface, to perform the method according to any one of claims 1 to 7, or perform the method according to any one of claims 8 to 14, or perform the method according to any one of claims 15 to 20.

24. A communication system, wherein the system comprises a data control apparatus and a plurality of data processing apparatuses, the plurality of data processing apparatuses are configured to execute a data service task, a first data processing apparatus in the plurality of data processing apparatuses is disposed in a target network apparatus, the data processing apparatus is configured to perform the method according to any one of claims 1 to 7, and the target network apparatus is configured to perform the method according to any one of claims 8 to 14.

25. The system according to claim 24, wherein the system further comprises a source network apparatus, and the target network apparatus is configured to perform the method according to any one of claims 15 to 20.

26. A computer-readable storage medium, wherein the computer-readable storage medium stores a computer program, and when the computer program is run on a computer, the computer is enabled to perform the method according to any one of claims 1 to 7, or perform the method according to any one of claims 8 to 14, or perform the method according to any one of claims 15 to 20.

27. A computer program product, wherein the computer program product comprises computer program code, and when the computer program code is run, the method according to any one of claims 1 to 7 is implemented, the method according to any one of claims 8 to 14 is performed, or the method according to any one of claims 15 to 20 is performed.
